# EUROPEAN PATENT APPLICATION

(11) **EP 4 711 836 A1**
(43) Date of publication of application: **18.03.2026**
(21) Application number: 24803406.8
(22) Date of filing: 26.04.2024
(51) Int. Cl.: G02B 27/28, G02F 1/09

(54) **METHOD FOR MANUFACTURING OPTICAL ISOLATOR AND OPTICAL ISOLATOR**

(30) Priority: 10.05.2023 JP 2023077674; 21.09.2023 JP 2023155813
(71) Applicant: Nippon Electric Glass Co., Ltd., Otsu-shi, Shiga 520-8639 (JP)
(72) Inventor: FURUYAMA, Tadahito, Otsu-shi, Shiga 520-8639 (JP)
(74) Representative: Tetzner, Michael
(86) International application number: PCT/JP2024/016383
(87) International publication number: WO 2024/232293

(57) **Abstract**

The present invention has an object of providing a method for manufacturing an optical isolator that can reduce misalignment of the direction of the light transmission axis of a polarizer. The present invention relates to a method for manufacturing an optical isolator including a Faraday element (2), a magnet (7) in which the Faraday element (2) is internally provided, a first polarizer (3) disposed on a light incidence side of the Faraday element (2), a second polarizer (4) disposed on a light exit side of the Faraday element (2), a first polarizer holder (5) housing the first polarizer (3), and a second polarizer holder (6) housing the second polarizer (4) and is characterized by including the steps of: placing a magnetic body (9) into the first polarizer holder (5) and attracting the first polarizer holder (5) and the magnet (7) by a magnetic force; and adjusting a direction of a light transmission axis of the first polarizer (3) by rotating the first polarizer holder (5) after the step of attracting the first polarizer holder (5) and the magnet (7) by the magnetic force.

## Description

### [Technical Field]

The present invention relates to methods for manufacturing optical isolators and optical isolators.

### [Background Art]

Optical isolators are magneto-optic elements that propagate light in a single direction and block back-reflected light. Optical isolators are used in laser oscillators for use in optical communication systems, laser processing systems, and so on. Patent Literature 1 below discloses an example of an optical isolator. In this optical isolator, polarizers are disposed at both end surfaces of a Faraday rotator in the direction of an optical axis. An adhesive layer is provided between the Faraday rotator and each of the polarizers. For example, the polarizer on a light exit surface side is disposed and adhered with the direction of polarization of transmitted light by this polarizer being inclined 45° with respect to the direction of polarization of transmitted light by the polarizer on a light entrance surface side.

### [Citation List]

### [Patent Literature]

[PTL 1]
JP-A-2003-322826

### [Summary of Invention]

### [Technical Problem]

However, in producing the optical isolator in Patent Literature 1, the angle of the polarizer is likely to become misaligned during the period from the time each polarizer is disposed at the end surface of the Faraday rotator to the time it is bonded to the end surface by adhesion.
Therefore, with respect to the direction of polarization of transmitted light by the polarizer on the light entrance surface side, i.e., the direction of the light transmission axis thereof, the tilt of the direction of the light transmission axis of the polarizer on the light exit surface side may become misaligned.

The present invention has an object of providing a method for manufacturing an optical isolator and an optical isolator, both of which can reduce misalignment of the direction of the light transmission axis of a polarizer.

### [Solution to Problem]

A method for manufacturing an optical isolator of aspect 1 in the present invention is a method for manufacturing an optical isolator including a Faraday element, a magnet in which the Faraday element is internally provided, a first polarizer disposed on a light incidence side of the Faraday element, a second polarizer disposed on a light exit side of the Faraday element, a first polarizer holder housing the first polarizer, and a second polarizer holder housing the second polarizer, and includes the steps of: placing a magnetic body into the first polarizer holder and attracting the first polarizer holder and the magnet by a magnetic force; and adjusting a direction of a light transmission axis of the first polarizer by rotating the first polarizer holder after the step of attracting the first polarizer holder and the magnet by the magnetic force.

A method for manufacturing an optical isolator of aspect 2 is the method for manufacturing an optical isolator according to aspect 1, wherein the first polarizer holder preferably includes a hole in which the magnetic body is to be placed, and the step of attracting the first polarizer holder and the magnet by the magnetic force preferably includes placing the magnetic body into the hole.

A method for manufacturing an optical isolator of aspect 3 is the method for manufacturing an optical isolator according to aspect 2, wherein the hole is preferably a threaded hole, the magnetic body preferably includes a threaded groove threadedly engageable with the threaded hole, and the step of attracting the first polarizer holder and the magnet by the magnetic force preferably includes the step of placing the magnetic body into the threaded hole by screw threading.

A method for manufacturing an optical isolator of aspect 4 is the method for manufacturing an optical isolator according to aspect 3 and preferably further includes, after the step of attracting the first polarizer holder and the magnet by the magnetic force, the step of adjusting a distance between the magnetic body and the magnet.

A method for manufacturing an optical isolator of aspect 5 is the method for manufacturing an optical isolator according to any one of aspects 1 to 4 and preferably includes, after the step of adjusting a direction of a light transmission axis of the first polarizer, the step of fixing the first polarizer holder.

A method for manufacturing an optical isolator of aspect 6 is the method for manufacturing an optical isolator according to aspect 5 and preferably further includes, after the step of fixing the first polarizer holder, the step of taking out the magnetic body from the first polarizer holder.

A method for manufacturing an optical isolator of aspect 7 is the method for manufacturing an optical isolator according to aspect 5 or 6, wherein after the step of fixing the first polarizer holder, the second polarizer holder is preferably fixed.

A method for manufacturing an optical isolator of aspect 8 is the method for manufacturing an optical isolator according to any one of aspects 1 to 7, wherein the step of attracting the first polarizer holder and the magnet by the magnetic force preferably includes the step of preparing the first polarizer holder in which the magnetic body is placed therein.

A method for manufacturing an optical isolator of aspect 9 is the method for manufacturing an optical isolator according to any one of aspects 1 to 8, wherein before the step of attracting the first polarizer holder and the magnet by the magnetic force, the second polarizer holder is preferably fixed.

A method for manufacturing an optical isolator of aspect 10 in the present invention is a method for manufacturing an optical isolator including a Faraday element, a magnet in which the Faraday element is internally provided, a first polarizer disposed on a light incidence side of the Faraday element, a second polarizer disposed on a light exit side of the Faraday element, a first polarizer holder housing the first polarizer, and a second polarizer holder housing the second polarizer, and includes the steps of: placing a magnetic body into the second polarizer holder and attracting the second polarizer holder and the magnet by a magnetic force; and adjusting a direction of a light transmission axis of the second polarizer by rotating the second polarizer holder after the step of attracting the second polarizer holder and the magnet by the magnetic force.

An optical isolator of aspect 11 in the present invention includes: a magnet including a through hole through which light passes; a Faraday element provided in the through hole of the magnet; a first polarizer disposed toward one end surface of the magnet in a direction of an optical axis, the direction of the optical axis being a direction of the light passing through the through hole of the magnet; a second polarizer disposed toward the other end surface of the magnet in the direction of the optical axis; a first polarizer holder housing the first polarizer; and a second polarizer holder housing the second polarizer, wherein at least one magnetic body is placed in the first polarizer holder.

An optical isolator of aspect 12 is the optical isolator according to aspect 11, wherein a plurality of the magnetic bodies are preferably placed in the first polarizer holder.

An optical isolator of aspect 13 is the optical isolator according to aspect 11 or 12, wherein the first polarizer holder preferably includes a hole and the magnetic body is preferably placed in the hole.

An optical isolator of aspect 14 is the optical isolator according to aspect 13, wherein the hole is preferably a threaded hole and the magnetic body preferably includes a threaded groove threadedly engageable with the threaded hole.

An optical isolator of aspect 15 is the optical isolator according to any one of aspects 11 to 14, wherein the first polarizer holder is preferably made of a non-magnetic body.

An optical isolator of aspect 16 in the present invention includes: a magnet including a through hole through which light passes; a Faraday element provided in the through hole of the magnet; a first polarizer disposed toward one end surface of the magnet in a direction of an optical axis, the direction of the optical axis being a direction of the light passing through the through hole of the magnet; a second polarizer disposed toward the other end surface of the magnet in the direction of the optical axis; a first polarizer holder housing the first polarizer; and a second polarizer holder housing the second polarizer, wherein the first polarizer holder includes a threaded hole and the threaded hole is hollow.

### [Advantageous Effects of Invention]

The present invention enables provision of a method for manufacturing an optical isolator and an optical isolator, both of which can reduce misalignment of the direction of the light transmission axis of a polarizer.

### [Brief Description of Drawings]

[Fig. 1]

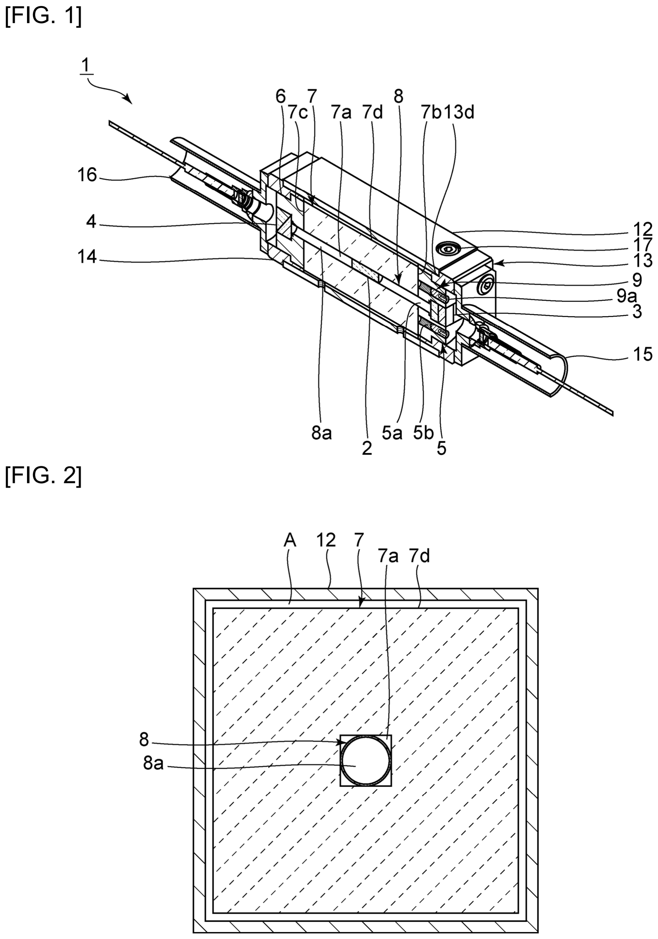

   Fig. 1 is a perspective view showing a cross section of an optical isolator according to a first embodiment of the present invention along the direction of an optical axis.
[Fig. 2]
   Fig. 2 is a cross-sectional view of the optical isolator according to the first embodiment of the present invention taken along a direction orthogonal to the direction of the optical axis.
[Fig. 3]

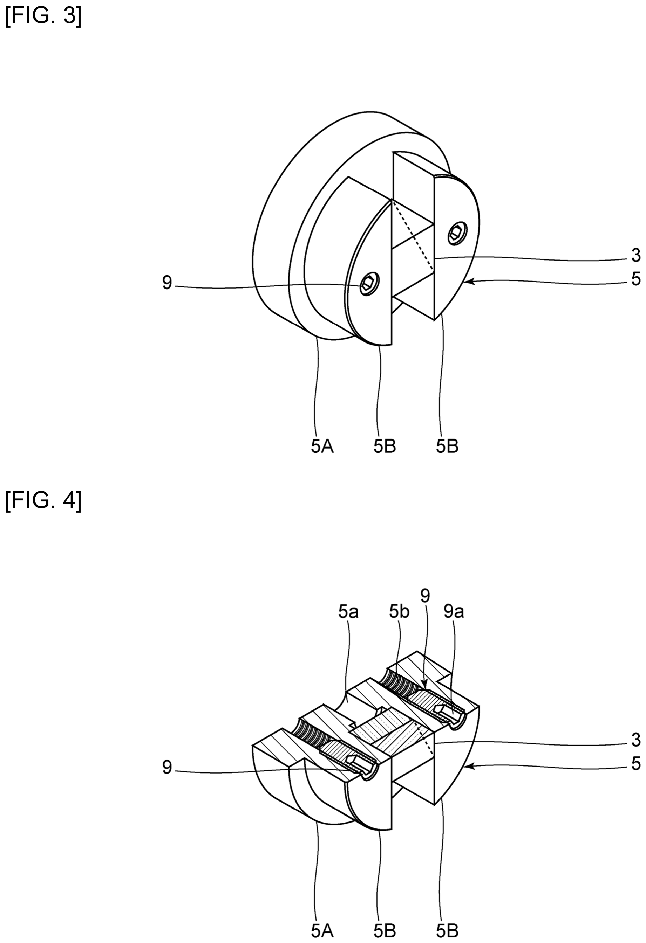

   Fig. 3 is a perspective view of a first polarizer holder and a first polarizer in the first embodiment of the present invention.
[Fig. 4]
   Fig. 4 is a perspective view showing cross sections of the first polarizer holder, the first polarizer, and magnetic bodies in the first embodiment of the present invention along the direction of the optical axis.
[Fig. 5]

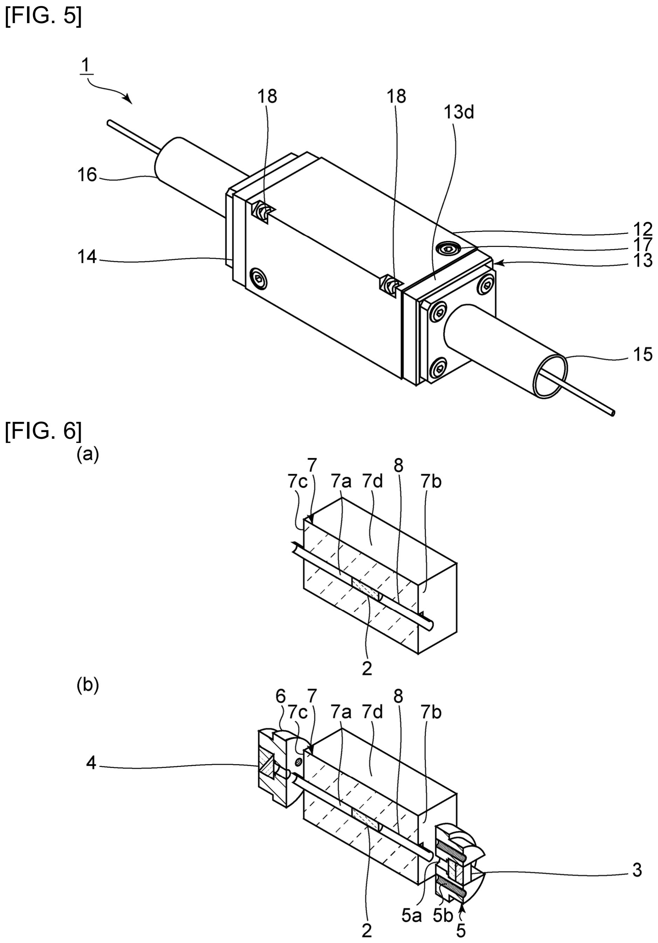

   Fig. 5 is a perspective view of the optical isolator according to the first embodiment of the present invention.
[Fig. 6]
   Figs. 6(a) and 6(b) are perspective views showing cross sections taken along the direction of an optical axis for illustrating a first embodiment of a method for manufacturing an optical isolator according to the present invention until the step of preparing a first polarizer holder and a second polarizer holder.
[Fig. 7]

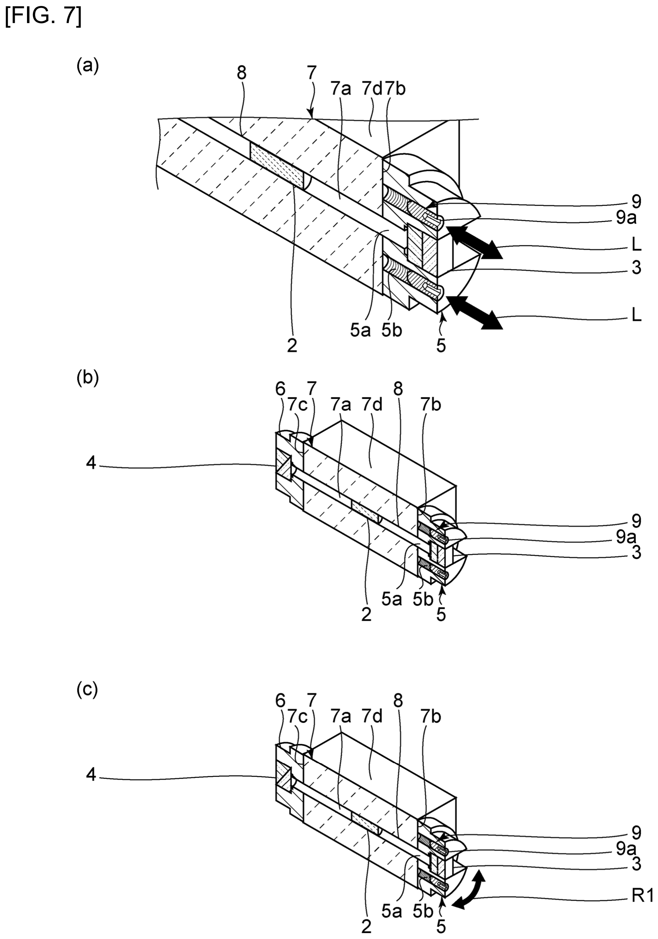

   Figs. 7(a) to 7(c) are perspective views showing cross sections taken along the direction of the optical axis for illustrating the step of placing magnetic bodies, the step of adjusting the distance from the magnetic bodies to a magnet, and the step of adjusting the angle of the first polarizer holder in the first embodiment of the method for manufacturing an optical isolator according to the present invention.
[Fig. 8]

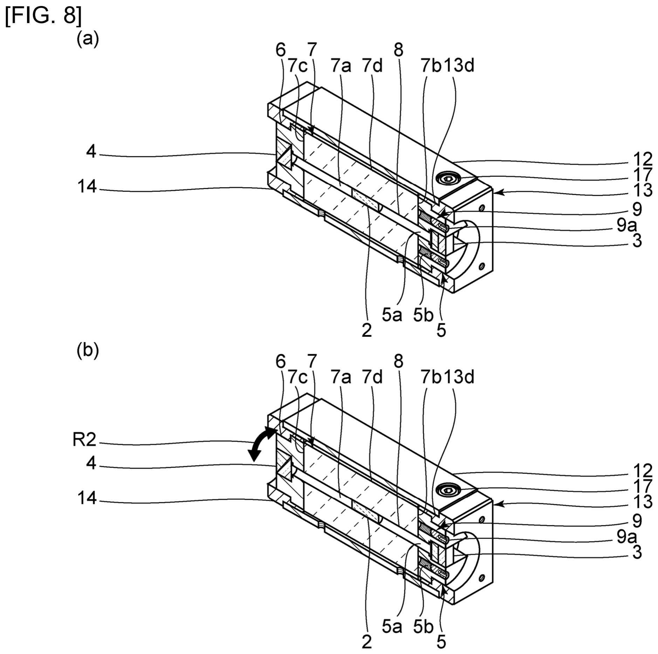

   Figs. 8(a) and 8(b) are perspective views showing cross sections taken along the direction of the optical axis for illustrating the step of housing the magnet and the polarizer holders in a case member and lid members and the step of adjusting the angle of the first polarizer holder after the step of housing in the first embodiment of the method for manufacturing an optical isolator according to the present invention.
[Fig. 9]

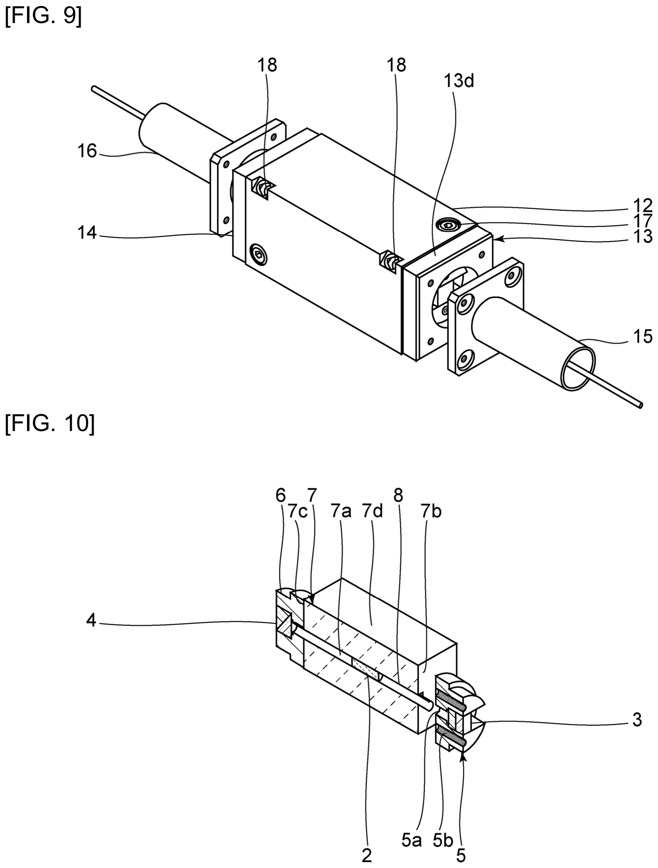

   Fig. 9 is a perspective view for illustrating the first embodiment of the method for manufacturing an optical isolator according to the present invention until the step of disposing a first fiber collimator and a second fiber collimator.
[Fig. 10]
   Fig. 10 is a perspective view showing a cross section taken along the direction of the optical axis for illustrating the step of attracting a second polarizer holder and a magnet to each other and the step of adjusting the angle of the second polarizer holder in an example of the method for manufacturing an optical isolator according to the present invention.
[Fig. 11]

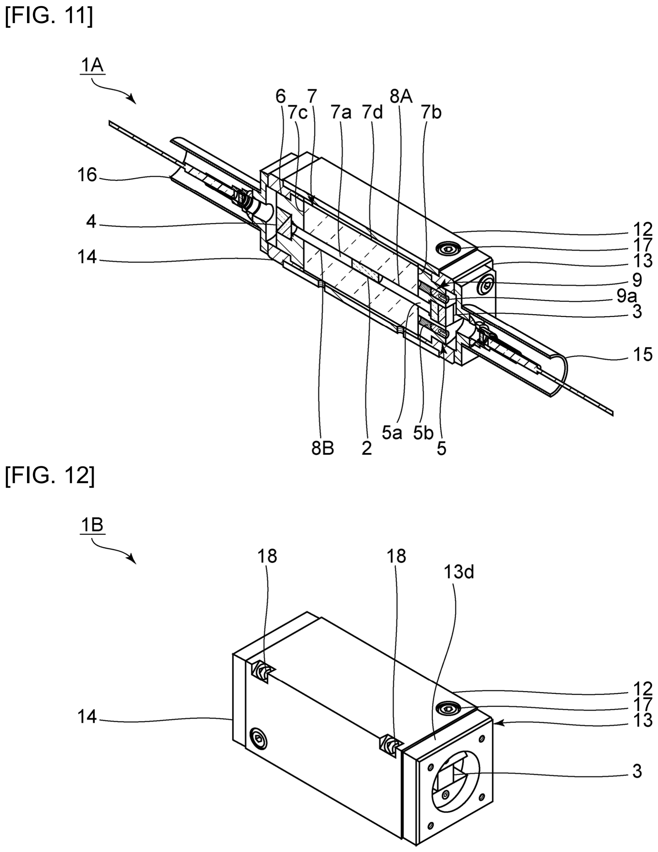

   Fig. 11 is a perspective view showing a cross section of an optical isolator according to a first modification of the first embodiment of the present invention along the direction of the optical axis.
[Fig. 12]
   Fig. 12 is a perspective view of an optical isolator according to a second modification of the first embodiment of the present invention.
[Fig. 13]

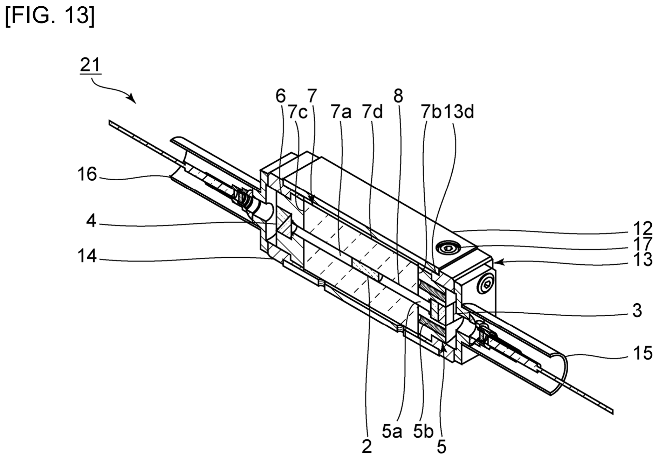

   Fig. 13 is a perspective view showing a cross section of an optical isolator according to a second embodiment of the present invention along the direction of an optical axis.
[Fig. 14]

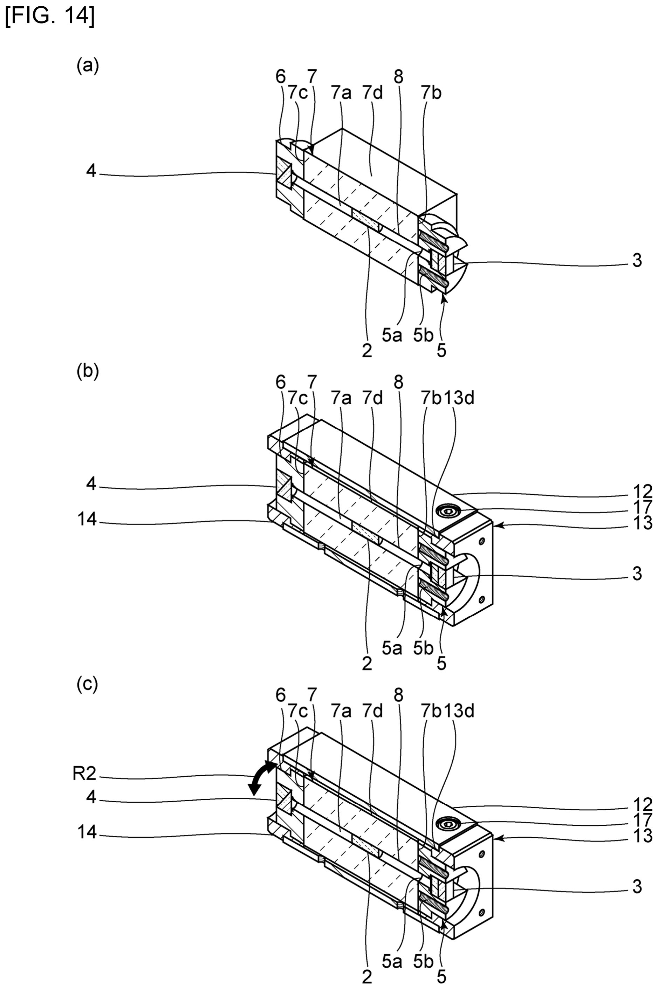

   Figs. 14(a) to 14(c) are perspective views showing cross sections taken along the direction of an optical axis for illustrating a second embodiment of a method for manufacturing an optical isolator according to the present invention.
[Fig. 15]

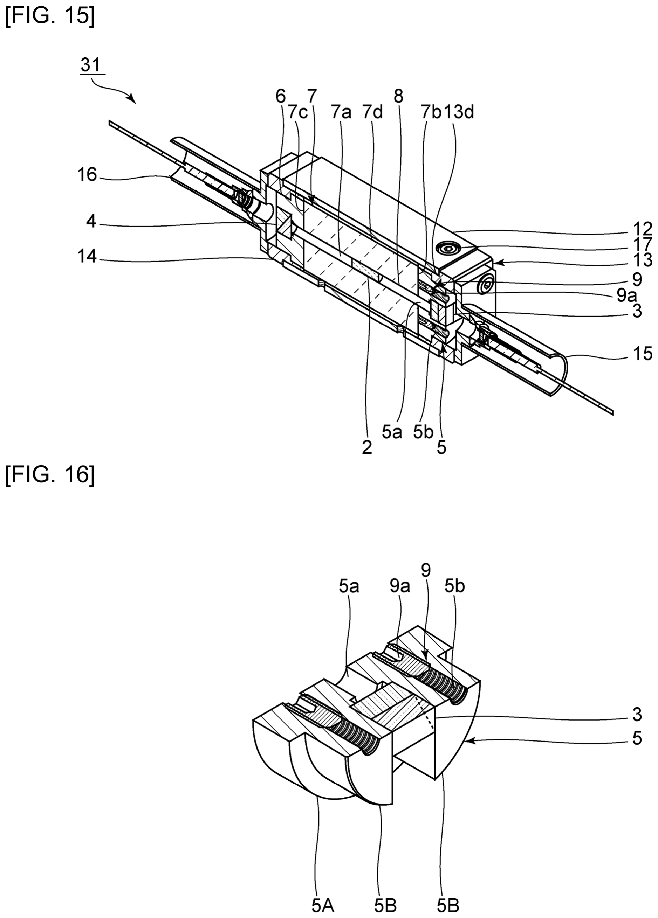

   Fig. 15 is a perspective view showing a cross section of an optical isolator according to a third embodiment of the present invention along the direction of an optical axis.
[Fig. 16]
   Fig. 16 is a perspective view showing cross sections of a first polarizer holder, a first polarizer, and magnetic bodies in the third embodiment of the present invention along the direction of the optical axis.
[Fig. 17]

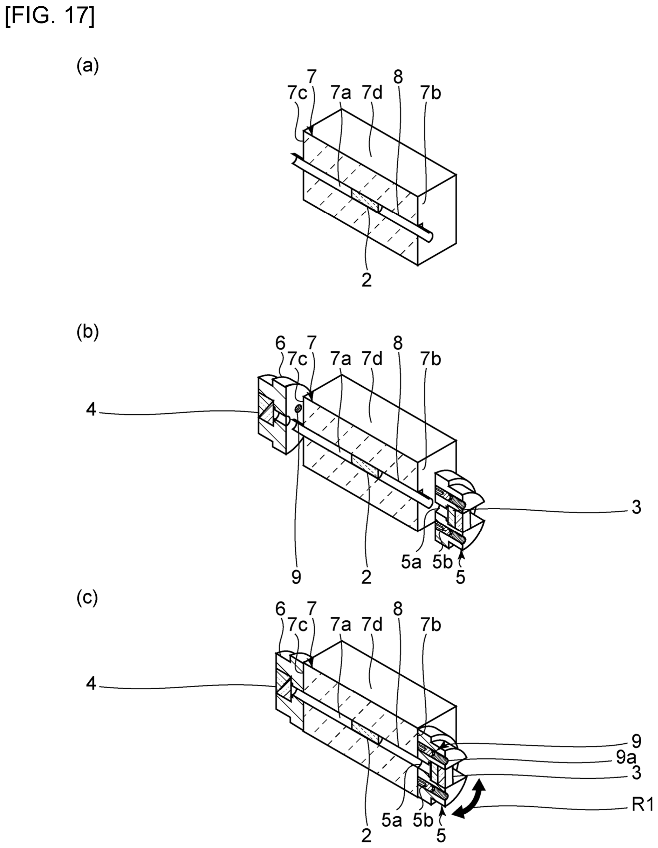

   Figs. 17(a) to 17(c) are perspective views showing cross sections taken along the direction of an optical axis for illustrating a third embodiment of a method for manufacturing an optical isolator according to the present invention.
[Fig. 18]

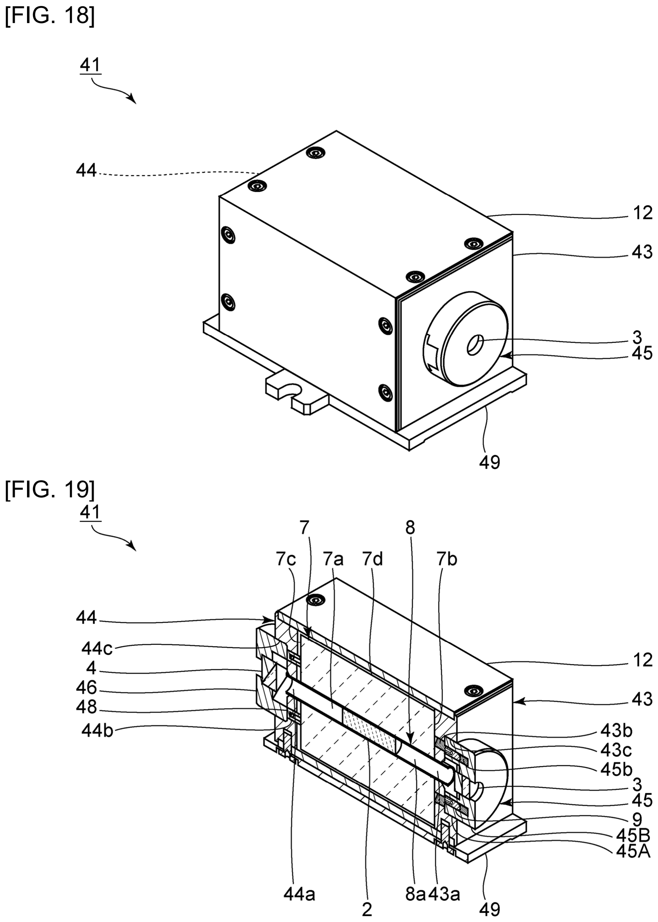

   Fig. 18 is a perspective view of an optical isolator according to a fourth embodiment of the present invention.
[Fig. 19]
   Fig. 19 is a perspective view showing a cross section of the optical isolator according to the fourth embodiment of the present invention along the direction of an optical axis.
[Fig. 20]

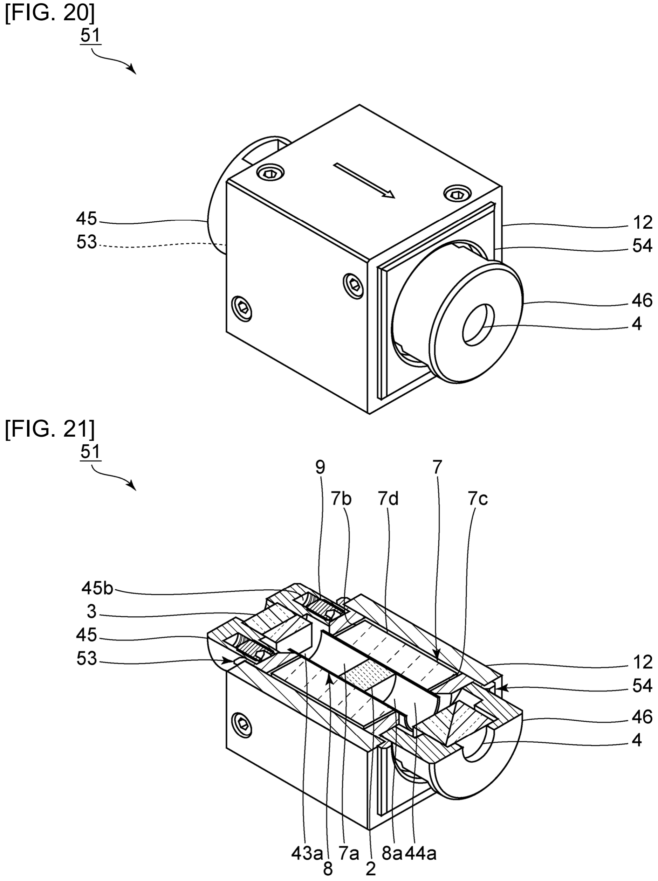

   Fig. 20 is a perspective view of an optical isolator according to a fifth embodiment of the present invention.
[Fig. 21]
   Fig. 21 is a perspective view showing a cross section of the optical isolator according to the fifth embodiment of the present invention along the direction of an optical axis.
[Fig. 22]

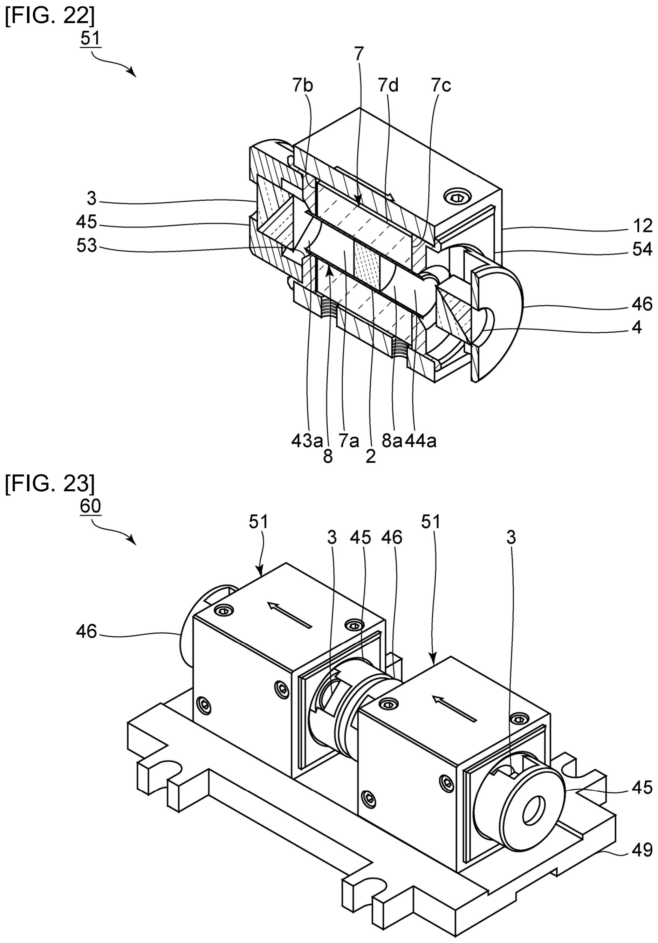

   Fig. 22 is a perspective view showing a cross section of the optical isolator according to the fifth embodiment of the present invention along the direction of the optical axis, the cross section being different from the cross section shown in Fig. 21.
[Fig. 23]
   Fig. 23 is a perspective view of a dual-stage optical isolator according to a sixth embodiment of the present invention.

### [Description of Embodiments]

Hereinafter, a description will be given of preferred embodiments. However, the following embodiments are merely illustrative and the present invention is not intended to be limited to the following embodiments. Throughout the drawings, members having substantially the same functions may be referred to by the same reference characters.

### (Optical Isolator)

### (First Embodiment)

Fig. 1 is a perspective view showing a cross section of an optical isolator according to a first embodiment of the present invention along the direction of an optical axis. Fig. 2 is a cross-sectional view of the optical isolator according to the first embodiment taken along a direction orthogonal to the direction of the optical axis.

As shown in Fig. 1, an optical isolator 1 includes a Faraday element 2, a first polarizer 3 and a second polarizer 4 as a pair of polarizers, a first polarizer holder 5, a second polarizer holder 6, a magnet 7, a tubular member 8, and a plurality of magnetic bodies 9.

The magnet 7 has an angular tube shape. The magnet 7 has a through hole 7a. Light passes through the through hole 7a. Hereinafter, the direction where light passes through the through hole 7a in the magnet 7 is defined as the direction of the optical axis.

More specifically, the magnet 7 has a first end surface 7b, a second end surface 7c, and a side surface 7d. The first end surface 7b and the second end surface 7c are opposed to each other in the direction of the optical axis. The first end surface 7b is one end surface of the magnet 7 in the direction of the optical axis. The second end surface 7c is the other end surface of the magnet 7 in the direction of the optical axis. The side surface 7d is connected to the first end surface 7b and the second end surface 7c. The through hole 7a is open at both the first end surface 7b and the second end surface 7c.

As shown in Fig. 2, the cross-sectional shape of the through hole 7a in the magnet 7 along the direction orthogonal to the direction of the optical axis is square. The cross-sectional shape of the through hole 7a is not limited to the above and may be, for example, a circular shape. The shape of the magnet 7 is not limited to an angular tube shape and may be, for example, a cylindrical shape.

A tubular member 8 is provided inside the through hole 7a of the magnet 7. In this embodiment, the tubular member 8 is a metallic pipe. The tubular member 8 has a cylindrical shape. The tubular member 8 has a through hole 8a. Light passes through the through hole 8a. The cross-sectional shape of the through hole 8a in the tubular member 8 along the direction orthogonal to the direction of the optical axis is circular. In this embodiment, SUS304 is used as a material for the tubular member 8. However, the material for the tubular member 8 is not limited to the above.

Referring back to Fig. 1, a Faraday element 2 is provided in the interior of the tubular member 8. More specifically, the Faraday element 2 is placed in a portion of the through hole 8a of the tubular member 8 located inside the through hole 7a of the magnet 7. However, the tubular member 8 need not necessarily be provided. In this case, it is sufficient that the Faraday element 2 is provided inside the through hole 7a of the magnet 7.

A first polarizer 3 is disposed on the side of the magnet 7 at which the first end surface 7b is located. On the other hand, a second polarizer 4 is disposed on the side of the magnet 7 at which the second end surface 7c is located. In other words, the first polarizer 3 and the second polarizer 4 are opposed to each other in the direction of the optical axis with the Faraday element 2 in between. In this embodiment, light enters the first polarizer 3, passes through the Faraday element 2, and exits the second polarizer 4.

The first polarizer 3 and the second polarizer 4 have their respective light transmission axes. Light having passed through the first polarizer 3 is converted to linearly polarized light according to the light transmission axis. The Faraday element 2 rotates the plane of the linearly polarized light. The angle of the polarized light plane rotated by the Faraday element 2 is defined as an angle of rotation. The angle of the light transmission axis of the second polarizer 4 to the light transmission axis of the first polarizer 3 is designed to be equal to the angle of rotation.

In this embodiment, both the first polarizer 3 and the second polarizer 4 are polarization beam splitters (PBS). Therefore, P-polarized light or S-polarized light passes through the first polarizer 3 and then enters the Faraday element 2. The second polarizer 4 is disposed to allow P-polarized light or S-polarized light which has entered the Faraday element 2 to pass through the second polarizer 4 in the direction of the optical axis. However, the type of the first polarizer 3 and the second polarizer 4 is not limited to the PBS.

The first polarizer 3 is housed in a first polarizer holder 5. The first polarizer holder 5 is disposed on the first end surface 7b of the magnet 7. On the other hand, the second polarizer 4 is housed in a second polarizer holder 6. The second polarizer holder 6 is disposed on the second end surface 7c of the magnet 7. In this embodiment, the first polarizer holder 5 and the second polarizer holder 6 are fixed to the magnet 7 with an adhesive agent. However, the relationship between each of the first polarizer holder 5 and the second polarizer holder 6 and the magnet 7 is not limited to fixation with an adhesive agent. For example, it is possible that the first polarizer holder 5 and the second polarizer holder 6 are not fixed to the magnet 7 with an adhesive agent, but the first polarizer holder 5 and the second polarizer holder 6 are attracted to the magnet by a magnetic force. Alternatively, in the present invention, the object to which the first polarizer holder 5 and the second polarizer holder 6 are to be fixed with an adhesive agent may be other than the magnet 7.

Fig. 3 is a perspective view of the first polarizer holder and the first polarizer in the first embodiment. Fig. 4 is a perspective view showing cross sections of the first polarizer holder, the first polarizer, and the magnetic bodies in the first embodiment along the direction of the optical axis.

As shown in Fig. 3, the first polarizer holder 5 includes a basal portion 5A and a pair of support portions 5B. The pair of support portions 5B are provided on the basal portion 5A. The first polarizer 3 is mounted on the basal portion 5A of the first polarizer holder 5 and held between the pair of support portions 5B.

In this embodiment, the basal portion 5A has a cylindrical shape. As shown in Fig. 4, the basal portion 5A has a through hole 5a. The first polarizer 3 is disposed to block the through hole 5a of the basal portion 5A. As shown in Fig. 3, each support portion 5B has an approximately semicircular column shape. Therefore, the side surface of each support portion 5B comprises a flat side surface and a curved side surface. Each support portion 5B supports the first polarizer 3 on its flat side surface. However, the number of support portions 5B and the shape of the support portion 5B are not limited to those described above. The support portion 5B need only be designed to support the first polarizer 3.

The basal portion 5A and the pair of support portions 5B are formed as a unit. Alternatively, the basal portion 5A may be formed separately from the pair of support portions 5B and bonded together. The material for the first polarizer holder 5 to be used is preferably a non-magnetic body. In this embodiment, an aluminum alloy which is a non-magnetic body is used. However, the material for the first polarizer holder 5 is not limited to the above.

The first polarizer holder 5 has a plurality of holes 5b. As shown in Fig. 4, one of the plurality of holes 5b penetrates through the basal portion 5A and one of the support portions 5B. Another one of the holes 5b penetrates through the basal portion 5A and the other support portion 5B. As seen from the above, each hole 5b is a through hole penetrating through the first polarizer holder 5. However, each hole 5b need not necessarily penetrate through the first polarizer holder 5. Each hole 5b may be a recess.

Each hole 5b is a threaded hole in this embodiment. A magnetic body 9 is placed in each hole 5b. The magnetic body 9 is specifically a set screw. Therefore, the magnetic body 9 has a drive socket 9a and a threaded groove. The drive socket 9a is a portion of the magnetic body 9 into which a jig, such as a hex wrench, is to be fitted. Of both ends of the magnetic body 9 proximal and distal to the magnet 7 shown in Fig. 1, the end thereof distal to the magnet 7 is where the drive socket 9a of the magnetic body 9 is located. The threaded groove is, specifically, a groove threadedly engageable with the threaded hole. The material for the magnetic body 9 is not particularly limited so long as it can be magnetized, but chromium-molybdenum steel is used in this embodiment.

The magnetic body 9 is not limited to a set screw. Furthermore, the hole 5b in the first polarizer holder 5 is not limited to a threaded hole. The hole 5b need only be provided to allow placement of the magnetic body 9 therein.

The second polarizer holder 6 shown in Fig. 1 is designed in the same way as the first polarizer holder 5. Of the first polarizer holder 5 and the second polarizer holder 6, at least the first polarizer holder 5 preferably includes at least one magnetic body 9 placed therein. In the case where the magnetic body 9 is placed in the second polarizer holder 6, it is sufficient that at least one magnetic body 9 is placed in the second polarizer holder 6. It is also possible that no magnetic body 9 is placed in the first polarizer holder 5, but the magnetic body 9 is placed in the second polarizer holder 6 only.

The second polarizer 4 is disposed to block the through hole of the second polarizer holder 6. The through holes in the first polarizer holder 5 and the second polarizer holder 6 are in communication with the through hole 7a in the magnet 7. Light passes through the through holes in the first polarizer holder 5 and the second polarizer holder 6 and the through hole 7a in the magnet 7.

A portion of the tubular member 8 including one end of the tubular member 8 is located inside the through hole 5a of the first polarizer holder 5. A portion of the tubular member 8 including the other end of the tubular member 8 is located inside the through hole of the second polarizer holder 6. The remaining portion of the tubular member 8 is located inside the through hole 7a of the magnet 7.

Fig. 5 is a perspective view of the optical isolator according to the first embodiment.

The optical isolator 1 further includes a case member 12, a first lid member 13, a second lid member 14, a first fiber collimator 15, and a second fiber collimator 16. The case member 12 has an angular tube shape. Therefore, a plurality of planar side surfaces of the case member 12 are connected at ridge lines thereof. Likewise, the first lid member 13 and the second lid member 14 also have an angular tube shape.

As shown in Fig. 1, the magnet 7, the first polarizer holder 5, and the second polarizer holder 6 are housed in the case member 12, the first lid member 13, and the second lid member 14. Specifically, the first lid member 13 is provided to wrap the periphery of the first polarizer holder 5. More specifically, the inner wall surface of the first lid member 13 has a stepped portion. Therefore, the inner diameter of the first lid member 13 is not constant. Meanwhile, also in the first polarizer holder 5 shown in Fig. 3, a stepped portion is formed by the basal portion 5A and the support portions 5B. The inner wall surface of the first lid member 13, the side surface of the basal portion 5A of the first polarizer holder 5, and the curved side surfaces of the support portions 5B of the first polarizer holder 5 are matingly fitted together.

Likewise, the second lid member 14 is provided to wrap the periphery of the second polarizer holder 6. The inner wall surface of the second lid member 14, the side surface of the basal portion of the second polarizer holder 6, and the curved side surfaces of the support portions of the second polarizer holder 6 are matingly fitted together.

The case member 12 is provided to cover a portion of the periphery of the first lid member 13, a portion of the periphery of the second lid member 14, and the periphery of the magnet 7. The first lid member 13 has a side surface 13d. The side surface 13d of the first lid member 13 faces the inner wall surface of the case member 12. Furthermore, the side surface 13d has a stepped portion. Therefore, the outer diameter of the first lid member 13 is not constant. The case member 12 and the first lid member 13 are fitted to each other. Specifically, the inner wall surface of the case member 12 and one end thereof in the direction of the optical axis are matingly fitted to a portion and the stepped portion of the side surface 13d of the first lid member 13.

Likewise, the case member 12 and the second lid member 14 are fitted to each other. In this embodiment, the first lid member 13 and the second lid member 14 are fixed to the case member 12 by screw fastening. However, the measure for fixing the first lid member 13 and the second lid member 14 to the case member 12 is not limited to screw fastening.

As shown in Fig. 2, a void space A is provided between the inner wall surface of the case member 12 and the side surface 7d of the magnet 7. The distance between the inner wall surface of the case member 12 and the side surface 7d of the magnet 7 is, for example, about 1 mm.

Referring back to Fig. 1, the first lid member 13 and the second lid member 14 have an angular tube shape. Light passes through an open portion of the first lid member 13 and then enters the first polarizer 3. On the other hand, light emitted from the first polarizer 3 passes through an open portion of the second lid member 14.

As a material for the case member 12, the first lid member 13, and the second lid member 14, an aluminum alloy is used. However, the material for the case member 12, the first lid member 13, and the second lid member 14 is not limited to the above.

A first fiber collimator 15 is provided toward the first polarizer holder 5. Specifically, the first fiber collimator 15 is fixed to the first lid member 13 by screw fastening. A second fiber collimator 16 is provided toward the second polarizer holder 6. Specifically, the second fiber collimator 16 is fixed to the second lid member 14 by screw fastening. However, the measure for fixing the first fiber collimator 15 and fixing the second fiber collimator 16 is not limited to screw fastening.

Light passes through the first fiber collimator 15 and then enters the first polarizer 3. The light passes through the first polarizer 3, is thus converted to linearly polarized light, and then enters the Faraday element 2. The plane of the polarized light having passed through the Faraday element 2 rotates. The light emitted from the Faraday element 2 enters the second polarizer 4. The light having passed through the second polarizer 4 is guided via the second fiber collimator 16 from the optical isolator 1 to an optical fiber.

As just described, in the optical isolator 1, the first fiber collimator 15 and the first polarizer 3 are disposed on the light incidence side of the Faraday element 2. The second fiber collimator 16 and the second polarizer 4 are disposed on the light exit side of the Faraday element 2. The second fiber collimator 16 and the second polarizer 4 may be disposed on the light incidence side of the Faraday element 2 and the first fiber collimator 15 and the first polarizer 3 may be disposed on the light exit side of the Faraday element 2.

A feature of this embodiment is that at least one magnetic body 9 is placed in the first polarizer holder 5. Thus, misalignment of the direction of the light transmission axis of the polarizer can be reduced. More specifically, misalignment of the angle formed between the light transmission axis of the first polarizer 3 and the light transmission axis of the second polarizer 4 can be reduced. The details of this will be described below together with an example of a method for manufacturing the optical isolator 1.

### (Manufacturing Method of Optical Isolator)

### (First Embodiment of Manufacturing Method)

Figs. 6(a) and 6(b) are perspective views showing cross sections taken along the direction of an optical axis for illustrating a first embodiment of a method for manufacturing an optical isolator according to the present invention until the step of preparing a first polarizer holder and a second polarizer holder. Figs. 7(a) to 7(c) are perspective views showing cross sections taken along the direction of the optical axis for illustrating the step of placing magnetic bodies, the step of adjusting the distance from the magnetic bodies to a magnet, and the step of adjusting the angle of the first polarizer holder in the first embodiment of the method for manufacturing an optical isolator. Figs. 8(a) and 8(b) are perspective views showing cross sections taken along the direction of the optical axis for illustrating the step of housing the magnet and the polarizer holders in a case member and lid members and the step of adjusting the angle of the first polarizer holder after the step of housing in the first embodiment of the method for manufacturing an optical isolator. Fig. 9 is a perspective view for illustrating the first embodiment of the method for manufacturing an optical isolator until the step of disposing a first fiber collimator and a second fiber collimator.

First, a magnet 7, a tubular member 8, and a Faraday element 2 each shown in Fig. 6(a) are prepared. Next, the tubular member 8 is disposed inside the through hole 7a of the magnet 7. At this time, both ends of the tubular member 8 are located outside the through hole 7a of the magnet 7. Next, the Faraday element 2 is placed into the tubular member 8. Alternatively, it is also possible that after the Faraday element 2 is placed into the tubular member 8, the tubular member 8 is disposed to allow a portion of the tubular member 8 to be located inside the through hole 7a of the magnet 7.

Meanwhile, a first polarizer 3, a second polarizer 4, a first polarizer holder 5, and a second polarizer holder 6 each shown in Fig. 6(b) are prepared. Next, the first polarizer 3 is housed in the first polarizer holder 5. Specifically, the first polarizer 3 is disposed to block the through hole 5a of the first polarizer holder 5. Likewise, the second polarizer 4 is housed in the second polarizer holder 6.

Next, as shown in Fig. 7(a), the first polarizer holder 5 is disposed on the first end surface 7b of the magnet 7. Specifically, the first polarizer holder 5 is disposed to allow a portion of the tubular member 8 to be located inside the through hole 5a of the first polarizer holder 5.

Next, respective magnetic bodies 9 are placed into the plurality of holes 5b of the first polarizer holder 5. More specifically, the magnetic bodies 9 are placed by screw threading into respective threaded holes which are the holes 5b. A magnetic force toward the magnet 7 is applied to each magnetic body 9. Thus, a force toward the magnet 7 is applied to the first polarizer holder 5. By the magnetic force, the first polarizer holder 5 attracts to the magnet 7.

After the step of attracting the first polarizer holder 5 and the magnet 7 by the magnetic force, the distance from the magnetic bodies 9 to the magnet 7 is adjusted as shown by the double-headed arrows L in Fig. 7(a). In this embodiment, the magnetic bodies 9 are set screws and the holes 5b in the first polarizer holder 5 are threaded holes. By fitting the drive socket 9a of each magnetic body 9 and a jig, such as a hex wrench, to each other and turning the magnetic body 9, the magnetic body 9 is moved close to or away from the magnet 7. In this manner, the magnetic force between the magnetic body 9 and the magnet 7 is adjusted. Thus, the attractive force of the first polarizer holder 5 toward the magnet 7 is adjusted.

Likewise, as shown in Fig. 7(b), the second polarizer holder 6 is disposed on the second end surface 7c of the magnet 7. The holes in the second polarizer holder 6 are not located in the cross section shown in Fig. 7(b). Next, respective magnetic bodies 9 are placed into the plurality of holes of the second polarizer holder 6. Next, the second polarizer holder 6 and the magnet 7 are attracted to each other by a magnetic force. Next, the distance from the magnetic bodies 9 to the magnet 7 is adjusted.

Next, as shown by the double-headed arrow R1 in Fig. 7(c), the angle of positioning of the first polarizer holder 5 with respect to the magnet 7 is adjusted. Specifically, this angle is adjusted by slidingly rotating the first polarizer holder 5 about an axis extending in the direction of the optical axis. More specifically, in this embodiment, the first polarizer holder 5 is slidingly rotated with the tubular member 8 as the central axis. Thus, the direction of the light transmission axis of the first polarizer 3 is adjusted.

In this embodiment, the magnetic bodies 9 are placed in the first polarizer holder 5. Furthermore, the first polarizer holder 5 is attracted to the magnet 7 by a magnetic force. Thus, even after the angle of positioning of the first polarizer holder 5 with respect to the magnet 7 has been adjusted, this angle is less likely to become misaligned.

Likewise, the angle of positioning of the second polarizer holder 6 with respect to the magnet 7 is adjusted. Specifically, the second polarizer holder 6 is slidingly rotated with respect to the magnet 7. Thus, the direction of the light transmission axis of the second polarizer 4 is adjusted.

Next, the first polarizer holder 5 and the magnet 7 are fixed to each other. In this embodiment, specifically, the first polarizer holder 5 and the magnet 7 are fixed to each other with an adhesive agent. Thereafter, the second polarizer holder 6 and the magnet 7 are fixed to each other. In this embodiment, specifically, the second polarizer holder 6 and the magnet 7 are fixed to each other with an adhesive agent. Although in this embodiment the direction of the light transmission axis is adjusted by attracting the first polarizer holder 5 and the magnet 7 by a magnetic force and then an adhesive agent is applied to them, the present invention is not limited to this manner. For example, after an adhesive agent is previously provided between the first polarizer holder 5 and the magnet 7 and before the adhesive force of the adhesive agent is exerted, the first polarizer holder 5 and the magnet 7 may be attracted by a magnetic force. Next, by sliding the first polarizer holder 5 on the magnet 7 through the adhesive agent, the direction of the light transmission axis may be adjusted. Thereafter, by exerting the adhesive force of the adhesive agent, the first polarizer holder 5 and the magnet 7 may be fixed to each other.

Next, a case member 12, a first lid member 13, and a second lid member 14 each shown in Fig. 8(a) are prepared. Next, the magnet 7 is disposed in the case member 12. Next, the first lid member 13 is disposed to cover the first polarizer holder 5. Specifically, the inner wall surface of the first lid member 13, the side surface of the basal portion 5A of the first polarizer holder 5, and the curved side surfaces of the pair of support portions 5B of the first polarizer holder 5 are matingly fitted together. Concurrently, the inner wall surface of the case member 12 and one end thereof in the direction of the optical axis are matingly fitted to a portion and the stepped portion of the side surface 13d of the first lid member 13.

Likewise, the second lid member 14 is disposed to cover the second polarizer holder 6. Specifically, the second lid member 14 and the second polarizer holder 6 are matingly fitted together. Concurrently, the case member 12 and the second lid member 14 are matingly fitted together.

Next, the first lid member 13 and the case member 12 are fixed to each other. In this embodiment, the first lid member 13 and the case member 12 are fixed to each other by screw fastening. In this screw fastening, screws 17 are used. Likewise, the second lid member 14 and the case member 12 are fixed to each other by screw fastening.

Next, as shown by the double-headed arrow R2 in Fig. 8(b), the angle of linearly polarized light to be emitted to the outside is adjusted. Specifically, the direction of the light transmission axis of the second polarizer 4 is adjusted. However, the relationship between the positions of the first polarizer 3 and the second polarizer 4 and the relationship between the directions of the light transmission axes thereof are already fixed in the step shown in Fig. 7(c). Therefore, in the current step, the angle formed between the light transmission axis of the first polarizer 3 and the light transmission axis of the second polarizer 4 does not change.

In this step, more specifically, with the second polarizer holder 6 housed in the second lid member 14 and the case member 12, the second polarizer holder 6 is rotated about an axis extending in the direction of the optical axis. Thus, the direction of the light transmission axis of the second polarizer 4 is adjusted to adjust the angle of linearly polarized light to be emitted to the outside. Along with this rotation of the second polarizer holder 6, the magnet 7 and the first polarizer holder 5 also rotate concurrently.

In this embodiment, the void space is provided between the inner wall surface of the case member 12 and the side surface 7d of the magnet 7. Therefore, the above adjustment can be implemented.

Next, the case member 12 and the second polarizer holder 6 are fixed to each other using a screw 18 shown in Fig. 9. Specifically, in this embodiment, in mounting the screw 18 at a ridge of the case member 12, the case member 12 and the second polarizer holder 6 are fixed by allowing the screw 18 to abut against the second polarizer holder 6. Likewise, the case member 12 and the first polarizer holder 5 are fixed to each other using another screw 18.

Next, as shown in Fig. 9, a first fiber collimator 15 and a second fiber collimator 16 are prepared. Next, the first fiber collimator 15 is fixed to the first lid member 13. In this embodiment, the first lid member 13 and the first fiber collimator 15 are fixed to each other by screw fastening. Likewise, the second lid member 14 and the second fiber collimator 16 are fixed to each other by screw fastening. In the manner described so far, an optical isolator 1 shown in Fig. 1 is obtained. However, the above manufacturing method is illustrative only and the method for manufacturing the optical isolator 1 is not limited to the above.

In this embodiment, at least one magnetic body 9 is placed in the first polarizer holder 5. Therefore, even before the first polarizer holder 5 is fixed to the magnet 7, the first polarizer holder 5 can be attracted to the magnet 7 by a magnetic force. Thus, even after the angle of positioning of the first polarizer holder 5 with respect to the magnet 7 has been adjusted, it is less likely that the angle becomes misaligned during the period until the first polarizer holder 5 is fixed to the magnet 7. Therefore, the direction of the light transmission axis of the first polarizer 3 is less likely to become misaligned. Hence, misalignment of the angle formed between the light transmission axis of the first polarizer 3 and the light transmission axis of the second polarizer 4 can be reduced.

At least one magnetic body 9 is preferably placed in each of the first polarizer holder 5 and the second polarizer holder 6. Thus, even after the direction of the light transmission axis of the second polarizer 4 has been adjusted, this direction is less likely to become misaligned. Hence, misalignment of the angle formed between the light transmission axis of the first polarizer 3 and the light transmission axis of the second polarizer 4 can be more certainly reduced.

A plurality of magnetic bodies 9 are preferably placed in the first polarizer holder 5. Thus, the attractive force of the first polarizer holder 5 toward the magnet 7 can be more certainly increased within a wide range. Hence, misalignment of the direction of the light transmission axis of the first polarizer 3 can be effectively reduced.

As shown in Fig. 7(a), of both ends of the magnetic body 9 proximal and distal to the magnet 7, the end thereof distal to the magnet 7 is preferably where the drive socket 9a of the magnetic body 9 is located. Thus, with the first polarizer holder 5 attracted to the magnet 7 by a magnetic force, the distance between the magnetic body 9 and the magnet 7 can be adjusted. Hence, the attractive force of the first polarizer holder 5 toward the magnet 7 can be more certainly adjusted to a suitable magnitude.

More specifically, for example, if the attractive force is too small, the effect of reducing misalignment of the direction of the light transmission axis of the first polarizer 3 may be small. On the other hand, if the attractive force is too large, the first polarizer holder 5 may become difficult to rotate and, thus, the direction of the light transmission axis of the first polarizer 3 may become difficult to adjust. In this embodiment, the above attractive force can be adjusted to a suitable magnitude. Therefore, misalignment of the angle formed between the light transmission axis of the first polarizer 3 and the light transmission axis of the second polarizer 4 can be easily reduced.

The holes 5b in the first polarizer holder 5 are preferably threaded holes. This makes it possible to easily decrease and increase the distance from the magnetic bodies 9 to the magnet 7. Therefore, the magnitude of the magnetic force between each magnetic body 9 and the magnet 7 can be easily adjusted. Hence, the attractive force of the first polarizer holder 5 toward the magnet 7 can be easily adjusted.

The holes 5b need not necessarily be threaded holes. Also in this case, the distance from the magnetic bodies 9 to the magnet 7 can be adjusted, for example, by pressing the magnetic bodies 9 from the outside. However, the holes 5b are preferably threaded holes as described above.

The holes 5b may be, for example, recessed threaded holes. In this case, for example, each hole 5b may be open either at a portion of the first polarizer holder 5 located toward the magnet 7 or at a portion thereof opposite to the above portion. However, the hole 5b is preferably open at a portion of the first polarizer holder 5 opposite to a portion thereof located toward the magnet 7. Thus, with the first polarizer holder 5 attracted to the magnet 7 by a magnetic force, the distance between the magnetic body 9 and the magnet 7 can be adjusted.

In the case where there is no particular need to adjust the distance from the magnetic bodies 9 to the magnet 7, the holes 5b may not be threaded holes. In this case, the holes 5b are not limited to round holes and may be holes 5b with an opening in a quadrangular, hexagonal or any other polygonal shape. In the case where the distance from the magnetic bodies 9 to the magnet 7 is previously defined, the holes 5b are preferably recesses. Alternatively, in this case, the holes 5b may be formed as through holes stepped in the middle to avoid direct contact of the magnetic bodies 9 with the magnet 7.

As in this embodiment, it is preferable that the tubular member 8 is provided. In this case, in adjusting the direction of the light transmission axis of the first polarizer 3, the first polarizer holder 5 can be rotated with the tubular member 8 as the central axis. Thus, during this adjustment, misalignment of the first polarizer holder 5 is less likely to occur. Likewise, in adjusting the direction of the light transmission axis of the second polarizer 4, misalignment of the second polarizer holder 6 is less likely to occur. However, even if the tubular member 8 is not provided, the magnet 7 and the first polarizer holder 5 can be temporarily fixed by attracting them by a magnetic force. Therefore, the through hole 5a in the first polarizer holder 5 can be aligned with the through hole 7a in the magnet 7 while the first polarizer holder 5 and the magnet 7 are slid together, which facilitates the alignment.

As shown in Fig. 2, a void space A is preferably provided between the inner wall surface of the case member 12 and the side surface 7d of the magnet 7. Thus, even after the magnet 7, the first polarizer holder 5, and the second polarizer holder 6 are housed in the case member 12, the first lid member 13, and the second lid member 14 each shown in Fig. 1, the angle of the linearly polarized light to be emitted to the outside can be adjusted. Therefore, the accuracy of the angle of the linearly polarized light to be emitted to the outside in the optical isolator 1 can be increased.

The shape of the portions of the first lid member 13 and the first polarizer holder 5 fitted to each other and the shape of the portions of the second lid member 14 and the second polarizer holder 6 fitted to each other when viewed from the direction of the optical axis are preferably circular. Thus, even after the magnet 7, the first polarizer holder 5, and the second polarizer holder 6 are housed in the case member 12, the first lid member 13, and the second lid member 14, the angle of the linearly polarized light to be emitted to the outside can be easily adjusted. In addition, the magnet 7, the first polarizer holder 5, and the second polarizer holder 6 can be suitably housed.

The wall thickness of the tubular member 8 is preferably not more than 0.1 mm, more preferably not more than 0.08 mm, even more preferably not more than 0.05 mm, and still even more preferably not more than 0.045 mm. Thus, the optically effective diameter in the optical isolator 1 can be increased without incurring an increase in the size of the optical isolator 1.

Meanwhile, the wall thickness of the tubular member 8 is preferably not less than 0.03 mm and more preferably not less than 0.035 mm. In this case, the strength of the tubular member 8 can be made sufficiently high.

As a material for the case member 12, A5052, which is an Al-Mg-based alloy, or A6063, which is an Al-Mg-Si-based alloy, is preferably used. Thus, the strength of the case member 12 can be suitably increased. As a material for the case member 12, A6063 is more preferably used. In this case, an angular tube shaped member can be easily obtained by extrusion. Therefore, particularly, the case member 12 can be easily obtained and, thus, the productivity can be increased. Furthermore, the strength of the case member 12 can be increased and concurrently the thickness thereof can be reduced.

In using A5052 as a material for the case member 12, the case member 12 can be formed, for example, by cutting machining. However, the material for the case member 12 is not limited to those mentioned above. For example, A6061, which is an Al-Mg-Si-based alloy, can also be suitably used as a material for the case member 12.

The wall thickness of the case member 12 is preferably not less than 1 mm and not more than 3.5 mm. In this case, the optical isolator 1 can be reduced in size. In the case where A6063 is used as a material for the case member 12, the strength of the case member 12 can be increased even when the thickness of the case member 12 is within the above range. Particularly, it is preferred that A6063 is used as a material for the case member 12 and the thickness of the case member 12 is not less than 1 mm and not more than 3.5 mm. Thus, size reduction of the optical isolator 1 can be certainly achieved and the optical isolator 1 can be more certainly made less susceptible to breakage.

The step of fixing the second polarizer holder 6 and the magnet 7 to each other shown in Fig. 7(c) is not limited to be done after the step of fixing the first polarizer holder 5 and the magnet 7 to each other. For example, as shown in Fig. 10, the second polarizer holder 6 and the magnet 7 may be fixed together before the step of attracting the first polarizer holder 5 and the magnet 7 by a magnetic force. In this case, for example, the magnetic bodies 9 are first placed into the second polarizer holder 6. Next, the second polarizer holder 6 and the magnet 7 are attracted by a magnetic force. Next, the distance from the magnetic bodies 9 to the magnet 7 is adjusted. Next, the angle of positioning of the second polarizer holder 6 with respect to the magnet 7 is adjusted. Specifically, the second polarizer holder 6 is slidingly rotated with respect to the magnet 7. Thus, the direction of the light transmission axis of the second polarizer 4 is adjusted. Thereafter, the steps shown in Figs. 7(a) to 7(c) can be done.

The structure of the optical isolator is not limited to the structure in the first embodiment shown in Fig. 1. For example, magnetic bodies 9 may be placed in, of the first polarizer holder 5 and the second polarizer holder 6, the first polarizer holder 5 only. Also in this case, using the step of attracting the first polarizer holder 5 and the magnet 7 by a magnetic force, the direction of the light transmission axis of the first polarizer 3 can be less likely to become misaligned. Hence, misalignment of the angle formed between the light transmission axis of the first polarizer 3 and the light transmission axis of the second polarizer 4 can be reduced. In this case, the second polarizer holder 6 may have the holes or may not have the holes.

Alternatively, magnetic bodies 9 may be placed in, of the first polarizer holder 5 and the second polarizer holder 6, the second polarizer holder 6 only. Also in this case, using the step of attracting the second polarizer holder 6 and the magnet 7 by a magnetic force, the direction of the light transmission axis of the second polarizer 4 can be less likely to become misaligned. Hence, misalignment of the angle formed between the light transmission axis of the first polarizer 3 and the light transmission axis of the second polarizer 4 can be reduced. In this case, the first polarizer holder 5 may have the holes 5b or may not have the holes 5b.

A description will be further given below of optical isolators according to a first modification and a second modification of the first embodiment. Also in the first modification and the second modification, like the first embodiment, misalignment of the angle formed between the light transmission axis of the first polarizer 3 and the light transmission axis of the second polarizer 4 can be reduced.

### (Optical Isolator)

### (First Modification)

Fig. 11 is a perspective view showing a cross section of an optical isolator according to a first modification of the first embodiment along the direction of an optical axis.

This modification is different from the first embodiment in that two tubular members 8A and 8B are provided. This modification is different from the first embodiment also in that the Faraday element 2 is placed neither inside the through hole of the tubular member 8A nor inside the through hole of the tubular member 8B. The Faraday element 2 is placed inside the through hole 7a of the magnet 7. As for the rest, an optical isolator 1A according to this modification has the same structure as the optical isolator 1 according to the first embodiment.

The tubular member 8A and the tubular member 8B are opposed to each other with the Faraday element 2 in between. A portion of the tubular member 8A including one end is located inside the through hole 7a of the magnet 7. The remaining portion of the tubular member 8A is located inside the through hole 5a of the first polarizer holder 5. A portion of the tubular member 8B including one end is located inside the through hole 7a of the magnet 7. The remaining portion of the tubular member 8B is located inside the through hole of the second polarizer holder 6.

In producing the optical isolator 1A according to this modification, in the step shown in Fig. 6(a), two tubular members 8A and 8B shown in Fig. 11 are prepared instead of the tubular member 8. Then, for example, after the Faraday element 2 is placed into the through hole 7a of the magnet 7, respective portions of the tubular member 8A and the tubular member 8B are disposed inside the through hole 7a of the magnet 7 with the Faraday element 2 in between. The subsequent steps can be done in the same manner as in the first embodiment of the method for manufacturing an optical isolator. The first polarizer holder 5 shown in Fig. 6(b) is disposed so that a portion of the tubular member 8A shown in Fig. 11 can be located inside the through hole 5a of the first polarizer holder 5. The second polarizer holder 6 is disposed so that a portion of the tubular member 8B can be located inside the through hole of the second polarizer holder 6.

Also in this modification, like the first embodiment, in adjusting the direction of the light transmission axis of the first polarizer 3, the first polarizer holder 5 can be rotated with the tubular member 8A as the central axis. Thus, during this adjustment, misalignment of the first polarizer holder 5 is less likely to occur. In adjusting the direction of the light transmission axis of the second polarizer 4, the second polarizer holder 6 can be rotated with the tubular member 8B as the central axis. Thus, also in adjusting the direction of the light transmission axis of the second polarizer 4, misalignment of the second polarizer holder 6 is less likely to occur.

Furthermore, in this modification, the tubular member 8A and the tubular member 8B are disposed with the Faraday element 2 in between. Thus, in producing the optical isolator 1A, the position of the Faraday element 2 can be fixed. Therefore, the Faraday element 2 is less likely to become misaligned. In this modification, the tubular member 8A and the tubular member 8B may be disposed away from the Faraday element 2. In other words, the tubular member 8A and the tubular member 8B may be brought into or out of contact with the Faraday element 2.

### (Second Modification)

Fig. 12 is a perspective view of an optical isolator according to a second modification of the first embodiment.

This modification is different from the first embodiment in that the first fiber collimator and the second fiber collimator are not provided. As for the rest, an optical isolator 1B according to this modification has the same structure as the optical isolator 1 according to the first embodiment. The optical isolator 1B can be used as an optical isolator in free space.

In producing the optical isolator 1B according to this modification, for example, the same method as the first embodiment of the method for manufacturing an optical isolator can be used except that the step of disposing a first fiber collimator and a second fiber collimator is not done.

### (Second Embodiment)

Fig. 13 is a perspective view showing a cross section of an optical isolator according to a second embodiment along the direction of an optical axis.

This embodiment is different from the first embodiment in that no magnetic body is placed in the first polarizer holder 5 and the second polarizer holder 6. As for the rest, an optical isolator 21 according to this embodiment has the same structure as the optical isolator 1 according to the first embodiment.

The first polarizer holder 5 of the optical isolator 21 has holes 5b similar to those in the first embodiment. The holes 5b are threaded holes. In producing the optical isolator 21, in the step of adjusting the direction of the light transmission axis of the first polarizer 3, magnetic bodies are placed in the holes 5b. Therefore, also in this embodiment, like the first embodiment, misalignment of the angle formed between the light transmission axis of the first polarizer 3 and the light transmission axis of the second polarizer 4 can be reduced. The magnetic bodies are removed after the first polarizer holder 5 and the magnet 7 are fixed to each other. Hereinafter, a description will be given of an example of a method for manufacturing an optical isolator 21.

### (Manufacturing Method of Optical Isolator)

### (Second Embodiment of Manufacturing Method)

A second embodiment of the method for manufacturing an optical isolator has much in common with the first embodiment of the method for manufacturing an optical isolator. Therefore, the description of the second embodiment will be given with reference to the figures and reference characters used for the description of the first embodiment.

In this embodiment, steps are done in the same manner as those shown in Figs. 6(a), 6(b), and 7(a) to 7(c) until the step of fixing the first polarizer holder 5 and the magnet 7 to each other. As shown by reference to Fig. 7(c), also in the second embodiment, the angle of positioning of the first polarizer holder 5 with respect to the magnet 7 is adjusted with magnetic bodies 9 placed in the first polarizer holder 5. Thus, the direction of the light transmission axis of the first polarizer 3 is adjusted. Since the first polarizer holder 5 is attracted to the magnet 7 by a magnetic force, even after the angle of positioning of the first polarizer holder 5 with respect to the magnet 7 has been adjusted, this angle is less likely to become misaligned.

Likewise, the angle of positioning of the second polarizer holder 6 with respect to the magnet 7 is adjusted with magnetic bodies 9 placed in the second polarizer holder 6. Thus, the direction of the light transmission axis of the second polarizer 4 is adjusted.

Next, the first polarizer holder 5 and the magnet 7 are fixed to each other. In this embodiment, specifically, the first polarizer holder 5 and the magnet 7 are fixed to each other with an adhesive agent. Likewise, the second polarizer holder 6 and the magnet 7 are fixed to each other with an adhesive agent.

Figs. 14(a) to 14(c) are perspective views showing cross sections taken along the direction of an optical axis for illustrating the second embodiment of the method for manufacturing an optical isolator.

As shown in Fig. 14(a), after the first polarizer holder 5 and the magnet 7 are fixed to each other, the magnetic bodies are removed from the first polarizer holder 5. Likewise, after the second polarizer holder 6 and the magnet 7 are fixed to each other, the magnetic bodies are removed from the second polarizer holder 6.

Next, as shown in Fig. 14(b), the magnet 7 is disposed in the case member 12. Next, the first lid member 13 is disposed to cover the first polarizer holder 5. Likewise, the second lid member 14 is disposed to cover the second polarizer holder 6. Next, the first lid member 13 and the case member 12 are fixed to each other by screw fastening. Likewise, the second lid member 14 and the case member 12 are fixed to each other by screw fastening.

Next, as shown by the double-headed arrow R2 in Fig. 14(c), the angle of the second polarizer holder 6 is adjusted by rotating the second polarizer holder 6 about an axis extending in the direction of the optical axis. Thus, the direction of the light transmission axis of the second polarizer 4 is adjusted to adjust the angle of linearly polarized light to be emitted to the outside.

In the optical isolator 21 shown in Fig. 13, the first polarizer holder 5 has threaded holes as the holes 5b. Therefore, in the manufacturing process, magnetic bodies 9 can be placed into the threaded holes as shown by reference to Fig. 7(c). Thus, while the first polarizer holder 5 is attracted to the magnet 7 by a magnetic force, the angle of positioning of the first polarizer holder 5 with respect to the magnet 7 can be adjusted. Therefore, misalignment of the angle between the first polarizer 3 and the second polarizer 4 can be reduced. Hence, misalignment of the angle formed between the light transmission axis of the first polarizer 3 and the light transmission axis of the second polarizer 4 can be reduced.

Furthermore, since the holes 5b in the first polarizer holder 5 are threaded holes, the magnetic bodies 9 can be removed after the first polarizer holder 5 and the magnet 7 are fixed to each other. The holes 5b which are threaded holes after the removal of the magnetic bodies 9 are hollow as shown in Fig. 13.

### (Optical Isolator)

### (Third Embodiment)

Fig. 15 is a perspective view showing a cross section of an optical isolator according to a third embodiment along the direction of an optical axis. Fig. 16 is a perspective view showing cross sections of a first polarizer holder, a first polarizer, and magnetic bodies in the third embodiment along the direction of the optical axis.

This embodiment shown in Fig. 15 is different from the first embodiment in the locations of drive sockets 9a of magnetic bodies 9 serving as set screws. Specifically, as shown in Fig. 16, this embodiment is different from the first embodiment in that, of both ends of the magnetic body 9 proximal and distal to the magnet 7, the end thereof proximal to the magnet 7 is where the drive socket 9a of the magnetic body 9 is located. The locations of the magnetic bodies 9 in this embodiment are closer to the magnet 7 than the locations of the magnetic bodies 9 in the first embodiment. As for the rest, an optical isolator 31 according to this embodiment has the same structure as the optical isolator 1 according to the first embodiment.

In producing the optical isolator 31 shown in Fig. 15, in the step of adjusting the direction of the light transmission axis of the first polarizer 3, the magnetic bodies 9 are placed in the holes 5b. Therefore, also in this embodiment, like the first embodiment, misalignment of the angle formed between the light transmission axis of the first polarizer 3 and the light transmission axis of the second polarizer 4 can be reduced. Hereinafter, a description will be given of an example of a method for manufacturing an optical isolator 31.

### (Manufacturing Method of Optical Isolator)

### (Third Embodiment of Manufacturing Method)

Figs. 17(a) to 17(c) are perspective views showing cross sections taken along the direction of an optical axis for illustrating a third embodiment of a method for manufacturing an optical isolator.

First, a magnet 7, a tubular member 8, and a Faraday element 2 each shown in Fig. 17(a) are prepared. Next, the tubular member 8 is disposed inside the through hole 7a of the magnet 7. At this time, both ends of the tubular member 8 are located outside the through hole 7a of the magnet 7. Next, the Faraday element 2 is placed into the tubular member 8.

Meanwhile, a first polarizer 3, a second polarizer 4, a first polarizer holder 5, and a second polarizer holder 6 each shown in Fig. 17(b) are prepared. In preparing a first polarizer holder 5, a first polarizer holder 5 with magnetic bodies 9 placed therein is prepared. In doing so, for example, it is possible that the first polarizer holder 5 is first produced and, then, respective magnetic bodies 9 are placed into a plurality of holes 5b in the first polarizer holder 5. In this embodiment, each magnetic body 9 is placed so that, of both ends of the magnetic body 9 proximal and distal to the magnet 7, the end thereof proximal to the magnet 7 can be where the drive socket 9a of the magnetic body 9 is located. However, each magnetic body 9 may be placed so that, of both ends of the magnetic body 9 proximal and distal to the magnet 7, the end thereof distal to the magnet 7 can be where the drive socket 9a of the magnetic body 9 is located.

Likewise, in preparing a second polarizer holder 6, a second polarizer holder 6 with magnetic bodies 9 placed therein is prepared.

Next, the first polarizer 3 is housed in the first polarizer holder 5. Specifically, the first polarizer 3 is disposed to block the through hole 5a of the first polarizer holder 5. Likewise, the second polarizer 4 is housed in the second polarizer holder 6.

Next, as shown in Fig. 17(c), the first polarizer holder 5 is disposed on the first end surface 7b of the magnet 7. Specifically, the first polarizer holder 5 is disposed to allow a portion of the tubular member 8 to be located inside the through hole 5a of the first polarizer holder 5. Likewise, the second polarizer holder 6 is disposed on the second end surface 7c of the magnet 7.

Next, as shown by the double-headed arrow R1 in Fig. 17(c), the angle of positioning of the first polarizer holder 5 with respect to the magnet 7 is adjusted. Thus, the direction of the light transmission axis of the first polarizer 3 is adjusted. Likewise, the angle of positioning of the second polarizer holder 6 with respect to the magnet 7 is adjusted. Thus, the direction of the light transmission axis of the second polarizer 4 is adjusted.

Next, the first polarizer holder 5 and the magnet 7 are fixed to each other with an adhesive agent. Likewise, the second polarizer holder 6 and the magnet 7 are fixed to each other with an adhesive agent. The subsequent steps can be done in the same manner as in the first embodiment of the method for manufacturing an optical isolator.

Also in this embodiment, in adjusting the angle of positioning of the first polarizer holder 5 with respect to the magnet 7, the first polarizer holder 5 is attracted to the magnet 7 by a magnetic force. Thus, even after the angle of positioning of the first polarizer holder 5 with respect to the magnet 7 has been adjusted, this angle is less likely to become misaligned. Hence, misalignment of the angle formed between the light transmission axis of the first polarizer 3 and the light transmission axis of the second polarizer 4 can be reduced.

Also in the case where, as in this embodiment, a first polarizer holder 5 with magnetic bodies 9 placed therein is prepared in preparing a first polarizer holder 5, the magnetic bodies 9 may be removed from the first polarizer holder 5 after the first polarizer holder 5 and the magnet 7 are fixed to each other. In this case, each magnetic body 9 is placed so that, of both ends of the magnetic body 9 proximal and distal to the magnet 7, the end thereof distal to the magnet 7 can be where the drive socket 9a of the magnetic body 9 is located. In addition, the holes 5b in the first polarizer holder 5 are open at a portion of the first polarizer holder 5 opposite to a portion thereof located toward the magnet 7. Furthermore, in the case where a first polarizer holder 5 with magnetic bodies 9 placed therein is prepared, when, for example, the first polarizer holder 5 is made of a resin material, the magnetic bodies 9 may be previously embedded in the first polarizer holder 5 in molding the first polarizer holder 5.

### (Optical Isolator)

### (Fourth Embodiment)

Fig. 18 is a perspective view of an optical isolator according to a fourth embodiment. Fig. 19 is a perspective view showing a cross section of the optical isolator according to the fourth embodiment along the direction of an optical axis.

An optical isolator 41 shown in Fig. 18 can be used as an optical isolator in free space. As shown in Fig. 19, also in this embodiment, like the first embodiment, at least one magnetic body 9 is placed in a first polarizer holder 45. Thus, misalignment of the direction of the light transmission axis of a first polarizer 3 can be reduced. Hereinafter, a description will be given of the details of the structure of this embodiment.

A magnet 7 is housed in a case member 12, a first lid member 43, and a second lid member 44. The case member 12 and the first lid member 43 are fitted to each other. Specifically, the inner wall surface of the case member 12 and one end thereof in the direction of the optical axis are matingly fitted to a portion and a stepped portion of the side surface of the first lid member 43. Likewise, the case member 12 and the second lid member 44 are fitted to each other. In this embodiment, the first lid member 43 and the second lid member 44 are fixed to the case member 12 by screw fastening. The measure for fixing the first lid member 43 and the second lid member 44 to the case member 12 is not limited to screw fastening.

A void space is provided between the inner wall surface of the case member 12 and the side surface 7d of the magnet 7. The distance between the inner wall surface of the case member 12 and the side surface 7d of the magnet 7 is, for example, about 1 mm.

The first lid member 43 has an angular tube shape. More specifically, the first lid member 43 has a recess 43c. The bottom of the recess 43c is opposed to a surface of the first lid member 43 facing the magnet 7. The bottom of the recess 43c is provided with a through hole 43a and a plurality of threaded holes 43b. Light passes through the through hole 43a and then enters a Faraday element 2.

Likewise, the second lid member 44 has an angular tube shape. More specifically, the second lid member 44 has a recess 44c. The bottom of the recess 44c is opposed to a surface of the second lid member 44 facing the magnet 7. The bottom of the recess 44c is provided with a through hole 44a and a plurality of threaded holes 44b. Light emitted from the Faraday element 2 passes through the through hole 44a. A tubular member 8 as described previously is provided throughout the inside of the through hole 7a of the magnet 7, the inside of the through hole 43a of the first lid member 43, and the inside of the through hole 44a of the second lid member 44.

A first end surface 7b of the magnet 7 abuts on the first lid member 43. On the other hand, a void space is provided between a second end surface 7c of the magnet 7 and the second lid member 44. More specifically, the plurality of threaded holes 44b of the second lid member 44 penetrate through the bottom of the recess 44c. Respective screws 48 are provided in the threaded holes 44b. The plurality of screws 48 abut on the second end surface 7c of the magnet 7. Furthermore, the plurality of screws 48 hold the magnet 7 against the first lid member 43.

Like the second lid member 44, the plurality of threaded holes 43b of the first lid member 43 penetrate through the bottom of the recess 43c. However, no screws 48 are provided in the threaded holes 43b. In the case where, as in this embodiment, threaded holes 43b are provided in the first lid member 43, lid members having the same structure can be used as the first lid member 43 and the second lid member 44. Therefore, the productivity can be increased. However, threaded holes 43b need not necessarily be provided in the first lid member 43.

A portion of a first polarizer holder 45 is provided in the recess 43c of the first lid member 43. The other portion of the first polarizer holder 45 is located outside the recess 43c. The first polarizer holder 45 includes a basal portion 45A and a single support portion 45B.

The basal portion 45A and the support portion 45B have a cylindrical shape. The respective through holes in the basal portion 45A and the support portion 45B are in communication with each other. The basal portion 45A and the support portion 45B have the same outer diameter. Furthermore, the basal portion 45A and the support portion 45B are formed as a unit. Therefore, the side surface of the first polarizer holder 45 has no stepped portion. The first polarizer holder 45 has a cylindrical shape. The portion of the side surface of the first polarizer holder 45 located inside the recess 43c of the first lid member 43 is in contact with the inner wall of the first lid member 43.

As shown in Fig. 18, an opening is provided in the side surface of the first polarizer holder 45. However, an opening need not necessarily be provided in the side surface of the first polarizer holder 45.

As shown in Fig. 19, the through hole in the support portion 45B of the first polarizer holder 45 is provided to support a first polarizer 3. In other words, the inner wall of the support portion 45B is in contact with the first polarizer 3. Specifically, assuming that surfaces of the first polarizer 3 opposed to each other in the direction of the optical axis are a pair of end surfaces and a surface thereof connected by the pair of end surfaces is a side surface, the support portion 45B supports the side surface and one end surface of the first polarizer 3.

More specifically, the through hole in the support portion 45B includes portions having different sizes in the direction orthogonal to the direction of the optical axis. Thus, the inner wall of the support portion 45B is provided with a stepped portion. At this stepped portion, the one end surface of the first polarizer 3 is supported. In this embodiment, in the support portion 45B, the size of the portion of the through hole closer to the light incidence side than the stepped portion is smaller than the size of the portion of the through hole located from the stepped portion toward the basal portion 45A.

In the support portion 45B, the shape of the cross section of the through hole taken along the direction orthogonal to the direction of the optical axis is different between both sides of the portion of the through hole where the stepped portion of the inner wall is located. The shape of the cross section of a portion of the through hole of the support portion 45B closer to the light incidence side than the stepped portion is circular. On the other hand, the shape of the cross section of a portion of the through hole of the support portion 45B located from the stepped portion toward the basal portion 45A is rectangular.

The first polarizer holder 45 is provided also with a through hole in the basal portion 45A. The respective through holes in the basal portion 45A and the support portion 45B are in communication with each other. Thus, a through hole in the first polarizer holder 45 is formed. When viewed from the direction of the optical axis, the peripheral edge of the through hole in the basal portion 45A is located lateral to the peripheral edge of the through hole in the support portion 45B. In this embodiment, a portion of the first polarizer 3 is supported by the support portion 45B and the remaining portion of the first polarizer 3 is located inside the through hole of the basal portion 45A.

The first polarizer holder 45 has a plurality of holes 45b. In this embodiment, the holes 45b are recesses open toward the first lid member 43. Each hole 45B is provided to extend across the basal portion 45A to the support portion 45B. The holes 45b are threaded holes. Respective magnetic bodies 9 are placed in the holes 45b. The holes 45b may be through holes.

The second polarizer holder 46 is designed in the same way as the first polarizer holder 45. A portion of the second polarizer holder 46 is provided inside the recess 44c of the second lid member 44. The other portion of the second polarizer holder 46 is located outside the recess 44c. The portion of the side surface of the second polarizer holder 46 located inside the recess 44c of the second lid member 44 is in contact with the inner wall of the second polarizer holder 46. A second polarizer 4 is housed in the second polarizer holder 46. The second polarizer 4 is supported by a support portion of the second polarizer holder 46. A portion of the second polarizer holder 46 other than the cross section shown in Fig. 19 is provided with a plurality of holes. Respective magnetic bodies 9 are placed in the plurality of holes.

The optical isolator 41 includes a substrate 49. The case member 12, the first lid member 43, and the second lid member 44 are fixed to the substrate 49 by screw fastening. More specifically, some of threaded holes for use in this screw fastening successively penetrate through the substrate 49, the first lid member 43, and the case member 12. The other threaded holes successively penetrate through the substrate 49, the second lid member 44, and the case member 12. However, the optical isolator 41 need not necessarily include the substrate 49.

A magnetic force toward the magnet 7 is applied to each magnetic body 9. Thus, a force toward the magnet 7 is applied to the first polarizer holder 45. In this embodiment, the first lid member 43 is provided between the magnet 7 and the first polarizer holder 45. Therefore, the first polarizer holder 45 is attracted to the first lid member 43 by a magnetic force. In other words, the first polarizer holder 45 is attracted indirectly to the magnet 7 through the first lid member 43 by a magnetic force. The first polarizer holder 45 and the first lid member 43 are not fixed by an adhesive agent.

However, the first polarizer holder 45 and the first lid member 43 may be fixed by an adhesive agent. In this case, for example, like the second embodiment shown in Fig. 13, the first polarizer holder 45 may have a structure in which the holes 45 are through holes and no magnetic bodies 9 are placed in the first polarizer holder 45. More specifically, in producing the optical isolator 41, after the first polarizer holder 45 and the first lid member 43 are fixed to each other, the magnetic bodies 9 may be removed from the first polarizer holder 45.

The first polarizer holder 46 is attracted to the second lid member 44 by a magnetic force. In other words, the second polarizer holder 46 is attracted indirectly to the magnet 7 through the second lid member 44 by a magnetic force. The second polarizer holder 46 and the second lid member 44 are not fixed by an adhesive agent.

However, the second polarizer holder 46 and the second lid member 44 may be fixed by an adhesive agent. In this case, for example, the second polarizer holder 46 may have a structure in which the holes therein are through holes and no magnetic bodies 9 are placed in the second polarizer holder 46. More specifically, in producing the optical isolator 41, after the second polarizer holder 46 and the second lid member 44 are fixed to each other, the magnetic bodies 9 may be removed from the second polarizer holder 46.

In the first embodiment shown in Fig. 1, the first polarizer holder 5 and the second polarizer holder 6 are attracted directly to the magnet 7 by a magnetic force. However, in the present invention, as shown in Fig. 19, the first polarizer holder 45 and the second polarizer holder 46 may be attracted indirectly to the magnet 7.

In producing the optical isolator 41 according to this embodiment, for example, the magnet 7 is first housed in the case member 12, the first lid member 43, and the second lid member 44. In doing so, the case member 12 and the first lid member 43 are fixed together by screw fastening. The case member 12 and the second lid member 44 are fixed together by screw fastening. Furthermore, the case member 12, the first lid member 43, and the second lid member 44 are fixed to the substrate 49 by screw fastening.

Next, the tubular member 8 is disposed through the inside of the through hole 7a of the magnet 7, the inside of the through hole 43a of the first lid member 43, and the inside of the through hole 44a of the second lid member 44. Next, the Faraday element 2 is placed into the tubular member 8. Alternatively, after the Faraday element 2 is placed into the tubular member 8, the tubular member 8 may be disposed through the insides of the above through holes. Still alternatively, after the tubular member 8 is disposed inside the through hole 7a of the magnet 7, the magnet 7 may be housed in the case member 12, the first lid member 43, and the second lid member 44.

Meanwhile, the first polarizer holder 45 is prepared. Next, respective magnetic bodies 9 are placed into the plurality of holes 45b of the first polarizer holder 45. Next, the first polarizer 3 is housed in the first polarizer holder 45. Likewise, the second polarizer holder 46 is prepared. Next, respective magnetic bodies 9 are placed into the plurality of holes of the second polarizer holder 46. Next, the second polarizer 4 is housed in the second polarizer holder 46.

Next, the first polarizer holder 45 is disposed so that a portion of the first polarizer holder 45 can be located in the recess 43c of the first lid member 43. Then, the first polarizer holder 45 is attracted indirectly to the magnet 7 through the first lid member 43 by a magnetic force.

Next, the first polarizer holder 45 is slidingly rotated relative to the first lid member 43. Specifically, the first polarizer holder 45 is rotated about an axis extending in the direction of the optical axis. Furthermore, the first polarizer holder 45 is slid on the bottom and the inner wall of the recess 43c of the first lid member 43. Thus, the direction of the light transmission axis of the first polarizer 3 is adjusted. The first polarizer holder 45 is attracted indirectly to the magnet 7 through the first lid member 43. Therefore, even after the angle of positioning of the first polarizer holder 45 with respect to the first lid member 43 has been adjusted, this angle is less likely to become misaligned.

Likewise, the second polarizer holder 46 is disposed so that a portion of the second polarizer holder 46 can be located in the recess 44c of the second lid member 44. Then, the second polarizer holder 46 is attracted indirectly to the magnet 7 through the second lid member 44 by a magnetic force.

Next, the second polarizer holder 46 is slidingly rotated relative to the second lid member 44. Specifically, the second polarizer holder 46 is rotated about an axis extending in the direction of the optical axis.
Furthermore, the second polarizer holder 46 is slid on the bottom and the inner wall of the recess 44c of the second lid member 44. Thus, the direction of the light transmission axis of the second polarizer 4 is adjusted. The second polarizer holder 46 is attracted indirectly to the magnet 7 through the second lid member 44. Therefore, even after the angle of positioning of the second polarizer holder 46 with respect to the second lid member 44 has been adjusted, this angle is less likely to become misaligned. Hence, also in this embodiment, like the first embodiment, misalignment of the angle formed between the light transmission axis of the first polarizer 3 and the light transmission axis of the second polarizer 4 can be reduced.

After the direction of the light transmission axis of the first polarizer 3 is adjusted, the first polarizer holder 45 may be fixed to the first lid member 43 with an adhesive agent. In the present invention, the step of fixing the first polarizer holder is sufficient to be the step of fixing the first polarizer holder to either one of the magnet and the first lid member.

Likewise, after the direction of the light transmission axis of the second polarizer 4 is adjusted, the second polarizer holder 46 may be fixed to the second lid member 44 with an adhesive agent. In the present invention, the step of fixing the second polarizer holder is sufficient to be the step of fixing the second polarizer holder to either one of the magnet and the second lid member.

The holes 45b in the first polarizer holder 45 may be through threaded holes. In this case, it is possible that the first polarizer holder 45 is fixed to the first lid member 43 with an adhesive agent and, then, the magnetic bodies 9 are removed from the first polarizer holder 45. The same applies to the second polarizer holder 46.

In this embodiment, the first polarizer holder 45 is not in contact with the tubular member 8. However, the portion of the side surface of the first polarizer holder 45 provided inside the recess 43c of the first lid member 43 is in contact with the inner wall of the first lid member 43. More specifically, when viewed from the direction of the optical axis, the shape of the peripheral edge of the first polarizer holder 45 and the shape of the peripheral edge of the recess 43c of the first lid member 43 are circular. The recess 43c of the first lid member 43 is designed so that in rotating the first polarizer holder 45, the side surface of the first polarizer holder 45 can slid on the inner wall of the first lid member 43. Thus, during the rotation of the first polarizer holder 45, misalignment of the first polarizer holder 45 is less likely to occur.

Likewise, the recess 44c of the second lid member 44 is designed so that in rotating the second polarizer holder 46, the side surface of the second polarizer holder 46 can slid on the inner wall of the second lid member 44. Thus, during the rotation of the second polarizer holder 46, misalignment of the second polarizer holder 46 is less likely to occur.

The side surface of the first polarizer holder 45 need not necessarily be in contact with the inner wall of the first lid member 43. The side surface of the second polarizer holder 46 need not necessarily be in contact with the inner wall of the second lid member 44.

### (Fifth Embodiment)

Fig. 20 is a perspective view of an optical isolator according to a fifth embodiment. Fig. 21 is a perspective view showing a cross section of the optical isolator according to the fifth embodiment along the direction of an optical axis. Fig. 22 is a perspective view showing a cross section of the optical isolator according to the fifth embodiment along the direction of the optical axis, the cross section being different from the cross section shown in Fig. 21. Fig. 22 shows the case where the angles of a first polarizer holder 45 and a second polarizer holder 46 are different from those shown in Figs. 20 and 21.

An optical isolator 51 shown in Fig. 20 can be used as an optical isolator in free space. As shown in Fig. 21, this embodiment is different from the fourth embodiment in that a first lid member 53 and a second lid member 54 have no threaded holes. This embodiment is different from the fourth embodiment also in that the substrate 49 shown in Fig. 18 is not provided. As for the rest, the basic structure of the optical isolator 51 according to this embodiment is the same as that of the optical isolator 41 according to the fourth embodiment. As shown in Fig. 22, the case member 12 is provided with threaded holes to enable the case member 12 to be fixed to a substrate or the like. However, the case member 12 need not necessarily be provided with these threaded holes.

As shown in Fig. 21, also in this embodiment, the first polarizer holder 45 is provided with a plurality of holes 45b. Respective magnetic bodies 9 are placed in the plurality of holes 45b. Thus, like the fourth embodiment, misalignment of the direction of the light transmission axis of the first polarizer 3 can be reduced. In addition, a portion of the second polarizer holder 46 other than the cross sections shown in Figs. 21 and 22 is provided with a plurality of holes. Respective magnetic bodies 9 are placed in the plurality of holes of the second polarizer holder 46. Thus, misalignment of the direction of the light transmission axis of the second polarizer 4 can be reduced. Hence, misalignment of the angle formed between the light transmission axis of the first polarizer 3 and the light transmission axis of the second polarizer 4 can be reduced.

### (Dual-Stage Optical Isolator)

### (Sixth Embodiment)

Fig. 23 is a perspective view of a dual-stage optical isolator according to a sixth embodiment.

The dual-stage optical isolator used herein refers to an optical isolator in which two optical isolators are coupled together. The dual-stage optical isolator 60 according to this embodiment includes a substrate 49 and two optical isolators 51. The two optical isolators 51 are fixed to the substrate 49. Each of both the optical isolators 51 is the optical isolator 51 according to the fifth embodiment. Therefore, the description of the this embodiment will be given with reference to the reference characters and figures used for the description of the fifth embodiment.

As shown in Fig. 23, the second polarizer holder 46 of one of the optical isolators 51 adjoins the first polarizer holder 45 of the other optical isolator 51. As shown by reference to Fig. 20, both the optical isolators 51 are disposed so that light having passed through the second polarizer 4 of the one optical isolator 51 can pass through the first polarizer 3 of the other optical isolator 51. The direction of the light transmission axis of the second polarizer 4 of the one optical isolator 51 is the same as the direction of the light transmission axis of the first polarizer 3 of the other optical isolator 51.

Since each of the optical isolators 51 is an optical isolator according to the present invention, misalignment of the direction of the light transmission axis of the polarizer can be reduced in each optical isolator 51. In addition, with the use of the dual-stage optical isolator 60, light passes through two pairs of the first polarizer 3 and the second polarizer 4. Thus, the isolation performance of the dual-stage optical isolator 60 can be increased.

In this embodiment, the Faraday element 2 of each optical isolator 51 rotates the plane of linearly polarized light 45°. For example, in the dual-stage optical isolator 60, the Faraday elements 2 of the two optical isolators 51 may rotate the plane of linearly polarized light in the same direction. In this case, in the dual-stage optical isolator 60, the plane of linearly polarized light rotates 90°.

Alternatively, for example, in the dual-stage optical isolator 60, the Faraday elements 2 of the two optical isolators 51 may rotate the plane of linearly polarized light in opposite directions to each other. In this case, in the dual-stage optical isolator 60, the angle of the plane of linearly polarized light when light has first passed through the first polarizer 3 is the same as the angle of the plane of linearly polarized light when the light has finally passed through the second polarizer 4.

The optical isolators constituting the dual-stage optical isolator according to the present invention are not limited to the optical isolators 51 according to the fifth embodiment. Each of the optical isolators constituting the dual-stage optical isolator according to the present invention need only be any optical isolator according to the present invention. The optical isolator according to the present invention can reduce misalignment of the direction of the light transmission axis of the polarizer. Therefore, in the dual-stage optical isolator according to the present invention, misalignment is less likely to occur between the direction of the light transmission axis of the second polarizer of the one optical isolator and the direction of the light transmission axis of the first polarizer of the other optical isolator. Hence, in the dual-stage optical isolator according to the present invention, the isolation performance can be more certainly increased.

### [Reference Signs List]

- 1: optical isolator
- 1A: optical isolator
- 1B: optical isolator
- 2: Faraday element
- 3: first polarizer
- 4: second polarizer
- 5: first polarizer holder
- 5A: basal portion
- 5B: support portion
- 5a: through hole
- 5b: hole
- 6: second polarizer holder
- 7: magnet
- 7a: through hole
- 7b: first end surface
- 7c: second end surface
- 7d: side surface
- 8: tubular member
- 8A: tubular member
- 8B: tubular member
- 8a: through hole
- 9: magnetic body
- 9a: drive socket
- 12: case member
- 13: first lid member
- 13d: side surface
- 14: second lid member
- 15: first fiber collimator
- 16: second fiber collimator
- 17: screw
- 18: screw
- 21: optical isolator
- 31: optical isolator
- 41: optical isolator
- 43: first lid member
- 43a: through hole
- 43b: threaded hole
- 43c: recess
- 44: second lid member
- 44a: through hole
- 44b: threaded hole
- 44c: recess
- 45: first polarizer holder
- 45A: basal portion
- 45B: support portion
- 45b: hole
- 46: second polarizer holder
- 48: screw
- 49: substrate
- 51: optical isolator
- 53: first lid member
- 54: second lid member
- 60: dual-stage optical isolator
- A: void space

## Claims

1. A method for manufacturing an optical isolator comprising a Faraday element, a magnet in which the Faraday element is internally provided, a first polarizer disposed on a light incidence side of the Faraday element, a second polarizer disposed on a light exit side of the Faraday element, a first polarizer holder housing the first polarizer, and a second polarizer holder housing the second polarizer, the method comprising the steps of:
placing a magnetic body into the first polarizer holder and attracting the first polarizer holder and the magnet by a magnetic force; and
adjusting a direction of a light transmission axis of the first polarizer by rotating the first polarizer holder after the step of attracting the first polarizer holder and the magnet by the magnetic force.

2. The method for manufacturing an optical isolator according to claim 1, wherein
the first polarizer holder includes a hole in which the magnetic body is to be placed, and
the step of attracting the first polarizer holder and the magnet by the magnetic force comprises placing the magnetic body into the hole.

3. The method for manufacturing an optical isolator according to claim 2, wherein
the hole is a threaded hole,
the magnetic body includes a threaded groove threadedly engageable with the threaded hole, and
the step of attracting the first polarizer holder and the magnet by the magnetic force comprises the step of placing the magnetic body into the threaded hole by screw threading.

4. The method for manufacturing an optical isolator according to claim 3, further comprising, after the step of attracting the first polarizer holder and the magnet by the magnetic force, the step of adjusting a distance between the magnetic body and the magnet.

5. The method for manufacturing an optical isolator according to claim 1, comprising, after the step of adjusting a direction of a light transmission axis of the first polarizer, the step of fixing the first polarizer holder.

6. The method for manufacturing an optical isolator according to claim 5, further comprising, after the step of fixing the first polarizer holder, the step of taking out the magnetic body from the first polarizer holder.

7. The method for manufacturing an optical isolator according to claim 5, wherein the second polarizer holder is fixed after the step of fixing the first polarizer holder.

8. The method for manufacturing an optical isolator according to claim 1, wherein the step of attracting the first polarizer holder and the magnet by the magnetic force comprises the step of preparing the first polarizer holder in which the magnetic body is placed therein.

9. The method for manufacturing an optical isolator according to any one of claims 1 to 8, wherein the second polarizer holder is fixed before the step of attracting the first polarizer holder and the magnet by a magnetic force.

10. A method for manufacturing an optical isolator comprising a Faraday element, a magnet in which the Faraday element is internally provided, a first polarizer disposed on a light incidence side of the Faraday element, a second polarizer disposed on a light exit side of the Faraday element, a first polarizer holder housing the first polarizer, and a second polarizer holder housing the second polarizer, the method comprising the steps of:
placing a magnetic body into the second polarizer holder and attracting the second polarizer holder and the magnet by a magnetic force; and
adjusting a direction of a light transmission axis of the second polarizer by rotating the second polarizer holder after the step of attracting the second polarizer holder and the magnet by the magnetic force.

11. An optical isolator comprising:
a magnet including a through hole through which light passes;
a Faraday element provided in the through hole of the magnet;
a first polarizer disposed toward one end surface of the magnet in a direction of an optical axis, the direction of the optical axis being a direction of the light passing through the through hole of the magnet;
a second polarizer disposed toward the other end surface of the magnet in the direction of the optical axis;
a first polarizer holder housing the first polarizer; and
a second polarizer holder housing the second polarizer,
wherein at least one magnetic body is placed in the first polarizer holder.

12. The optical isolator according to claim 11, wherein a plurality of the magnetic bodies are placed in the first polarizer holder.

13. The optical isolator according to claim 11, wherein the first polarizer holder includes a hole and the magnetic body is placed in the hole.

14. The optical isolator according to claim 13, wherein the hole is a threaded hole and the magnetic body includes a threaded groove threadedly engageable with the threaded hole.

15. The optical isolator according to any one of claims 11 to 14, wherein the first polarizer holder is made of a non-magnetic body.

16. An optical isolator comprising:
a magnet including a through hole through which light passes;
a Faraday element provided in the through hole of the magnet;
a first polarizer disposed toward one end surface of the magnet in a direction of an optical axis, the direction of the optical axis being a direction of the light passing through the through hole of the magnet;
a second polarizer disposed toward the other end surface of the magnet in the direction of the optical axis;
a first polarizer holder housing the first polarizer; and
a second polarizer holder housing the second polarizer,
wherein the first polarizer holder includes a threaded hole and the threaded hole is hollow.
